# EUROPEAN PATENT SPECIFICATION

(11) **EP 1 154 620 B1**
(45) Date of publication and mention of the grant of the patent: **02.02.2005**
(21) Application number: 00124320.3
(22) Date of filing: 16.11.2000
(51) Int. Cl.: H04M 1/2745, H04Q 3/66

(54) **Terminal adapter, computer-readable recording medium, and terminal adapter management system**
Endgerätanpassungseinrichtung, rechnerlesbares Aufzeichnungsmedium, und Verwaltungssystem für Endgerätanpassungseinrichtungen
Adaptateur de terminal, moyen d'enregistrement lisible par ordinateur, et système de gestion pour adaptateurs de terminal

(30) Priority: 06.04.2000 JP 2000104948
(43) Date of publication of application: 14.11.2001
(73) Proprietor: Sophia International Co., Ltd., Tokyo (JP)
(72) Inventor: Kinoshita, Kentoku, Toshima-ku, Tokyo (JP)
(74) Representative: Modiano, Guido, Dr.-Ing.

(56) References cited:
- WO-A-98/32288
- WO-A-99/23803
- US-A- 5 329 580
- US-A- 5 715 304
- PATENT ABSTRACTS OF JAPAN vol. 1998, no. 02, 30 January 1998 (1998-01-30) & JP 09 284376 A (NEC CORP), 31 October 1997 (1997-10-31)

## Description

### Background of the Invention

### Field of the Invention

The present invention relates to a terminal adapter, having a direct-dialing function, an auto-dialing function and a routing function, for connecting a user terminal device to a telecommunication network, and relates to a computer-readable recording medium storing therein programs which permit a computer, loaded with the programs, to serve as a communication control section of a terminal adapter of the aforementioned type. The present invention also relates to a terminal adapter management system in which the initial setting and renewal of line-connection information and a toll table, stored in each individual terminal adapter and used to achieve the aforementioned functions, can be performed by a service center through a telecommunication network.

### Related Art

In addition to public telecommunication networks provided by a primary telecommunication enterprise (hereinafter referred to as "common carrier" or "CC") such as Nippon Telegraph and Telephone Co., a variety of telecommunication networks (hereinafter referred to as "NCC networks") accessible by various users have been provided by other telecommunication enterprises (hereinafter referred to as "new common carriers" or "NCCs"). When each individual user utilizes an NCC network provided by a particular NCC with which the user made a contract service, the user operates a user terminal device, e.g., a telephone, to dial an enterprise identification number [00XX] (hereinafter referred to as "NCC identification number") specifying such a particular NCC, and then dials a called party's telephone number. In response to this, the user's telephone delivers the NCC identification number to the public telecommunication network, so that it may be connected via the public telecommunication network to a relevant NCC exchange. Then, the called party's telephone number is delivered to start to establish a line connection between the user' s terminal device and a called party's terminal device through the public and NCC communication networks. In a case where the user terminal device is connected, through a terminal adapter having a DSC (Digital Service Unit) function, to a digital telecommunication network such as an ISDN, the terminal adapter delivers an NCC identification number and a called party' s telephone number manually input through the user terminal device for utilization of an NCC network.

In this manner, an NCC identification number is generally required to be input for utilization of an NCC network. To obviate such a burdensome input operation, some of terminal adapters have an auto-dialing function (supplementary-information delivering function) of automatically delivering an NCC identification number, where required, when a called party's telephone number is manually input. Such a terminal adapter is for example disclosed in document US-A-5-329 580 (YOSHINO K) 12 July 1994 (1994-07-12). However, a terminal adapter of this type is only adapted for use with a single NCC. To selectively utilize an arbitrary one of NCC telecommunication networks with auto-dialing, terminal devices and a switching device, by way of example, must be installed between the user terminal device and the subscriber line and a required one of terminal adapters must be selected by operating the switching device, to thereby connect the user terminal device to the subscriber line through the selected terminal device and the switching device. Thus, each individual user cannot utilize an arbitrary one NCC network with ease.

So-called priority connection services (which are also referred to as carrier selection services or dialing parity services) are scheduled to be provided for practical use in Japan, in which services an NCC identification number, registered in a CC exchange upon request of each individual user, is automatically delivered from the CC exchange when the user makes a call. With the priority connection services, however, only a single NCC identification number can be registered in a CC exchange. If the user wishes to utilize an NCC other than the registered NCC, he or she must input the identification number of the unregistered NCC. The priority-connection services do not permit each individual user to selectively utilize an arbitrary one of NCCs with ease.

A direct-dial telephone having a direct-dialing function (fixed-connection function or called-party designating function) of calling up the same called party's telephone for every call is known, and an adapter having an LCR (Least-Cost Routing) function or an ACR (Automatic Carrier Routing) function of selecting the lowest-cost telecommunication network or an arbitrary telecommunication network is known. It is convenient for each individual user if he or she can easily utilize these functions.

### Summary of the Invention

An object of the present invention is to provide a terminal adapter having a direct-dialing function, an auto-dialing function and a routing function, thereby permitting each individual user to easily utilize his or her terminal device in various forms.

Another object of the present invention is to provide a computer-readable recording medium stored with programs for permitting a computer to serve as a communication control section of a terminal adapter having a direct-dialing function, an auto-dialing function and a routing function.

A further object of the present invention is to provide a terminal adapter management system in which the initial setting and renewal of line-connection information and a toll table, which are stored in a memory device of a terminal adapter to achieve a direct-dialing function, an auto-dialing function and a routing function, can be performed by a service center through a telecommunication network, to thereby offer each individual user an optimum telecommunication circumstance adapted to his or her utilization form of telecommunication which varies between users and which changes with changes in his or her preference, family structure, or other circumstances.

According to one aspect of the present invention, there is provided a terminal adapter which comprises a communication control section for selectively performing an arbitrary one of a first function of reading out a called party's telephone number stored in advance as first line-connection information in a memory device of the terminal adapter and of delivering the same to a subscriber line when a user terminal device connected to the terminal adapter is taken off-hook, a second function of reading out second line-connection information from the memory device and of delivering the same prior to delivery of a called party's telephone number when the called party's telephone number is input through the user terminal device, and a third function of reading out, from the memory device, third line-connection information used to establish a line connection with a particular telecommunication network provided by a particular common carrier with which a user made a service contract and of delivering the same prior to delivery of a called party's telephone number when the called party's telephone number is input through the user terminal device.

According to the terminal adapter of the present invention, if the terminal adapter is set such that the communication control section performs the first function, the terminal adapter can call up the same called party's telephone number every time the user terminal device such as a telephone is taken off-hook. That is, a direct-dialing (called-party designating) function is achieved.

In case the terminal adapter is set such a way as to perform the second function, supplementary information (the second line-connection information) such as a caller ID or a password, which is to be delivered for line-connection with a certain telecommunication network, can be automatically delivered. This is convenient for the user in that he or she is not required to conduct an operation of inputting the supplementary information. In particular, if an NCC identification number serving as the second line-connection information is stored in the memory device, the NCC identification number is automatically delivered from the terminal adapter when the called party's telephone number manually input is intended to utilize an NCC telecommunication network. That is, an auto-dialing function is achieved. If the terminal adapter is provided with a toll table and a least-cost-route selecting function for selecting an NCC telecommunication network, which is useable with the lowest cost, in accordance with time zone and telecommunication district of a called party, the second line-connection information, e.g., an NCC identification number, is determined by the least-cost-route selecting function, whereby an NCC identification number associated with an NCC telecommunication network useable with the lowest cost can be automatically delivered.

If the terminal adapter is set such a way as to perform the third function, the third line-connection information required to utilize an NCC telecommunication network can be automatically delivered. That is, a routing function is achieved. In particular, if NCC exchange identification numbers, e.g., NCC exchange telephone numbers, serving as the third line-connection information, are stored, a first NCC exchange identification number or a first NCC exchange telephone number is automatically delivered in response to the user terminal device being taken off-hook, so that the routing to a corresponding NCC exchange may be made without aid of ordinary routing by means of a local switchboard, whereby an attempt is made to establish a line connection with a corresponding NCC telecommunication network. Further, a second and later NCC exchange identification numbers or a second and later NCC exchange telephone numbers are sequentially delivered, where required, until a line connection is established. In combination with the least-cost-route selecting function, an attempt may be made to establish a line connection in an ascending order of toll.

In the case of a telecommunication system in which ordinary routing is performed by means of a local switchboard responsive to the delivery of an NCC identification number, individual NCCs are required to obtain approval for usage of their NCC identification numbers from a government office and to ask the CC to register the NCC identification numbers in a numerous number of CC exchanges, prior to the start of operations of their telecommunication networks. This requires a massive amount of cost and time. In addition, an individual user must pay a high-priced fee for services rendered by the CC for connecting the user's terminal device to an NCC network. Contrary to this, according to the present invention in which an NCC exchange identification number, e.g., an NCC exchange telephone number, can be automatically delivered from the terminal adapter, a line connection between the terminal adapter (i.e., the user terminal device) and an NCC exchange can be established without aid of ordinary routing by means of a local switchboard.

The terminal adapter of the present invention may be configured in various manners. The following are concrete examples of configuration of the terminal adapter.

As for the second and third functions of the terminal adapter, the memory device of the terminal adapter stores a phone table in which telephone numbers, for which a public telecommunication network should be utilized, or area codes including a user's local area code, or common carrier identification numbers are listed. The communication control section delivers the called party's telephone number manually input through the user terminal device, without delivering a toll area code or a common carrier identification number, if the manually input called party's telephone number or its several highest-order digits is/are coincide with any one of the telephone numbers, the area codes, and the common carrier identification numbers listed in the phone table. With this concrete example, a line connection via the public telecommunication network is immediately started, if a called party's telephone number for which the public telecommunication network should be utilized, for instance, is input. Further, there is no fear that a common carrier identification number for which the user did not make a service contract is delivered.

In another example associated with the second function of the terminal adapter, the memory device stores an addition phone table in which a plurality of common carrier identification numbers are listed and a toll table in which pieces of structured toll information in respect of telecommunication networks are associated with network-utilization conditions and common carrier names or common carrier identification numbers or exchange identification numbers. The communication control section responsive to manual input of a called party's telephone number sequentially delivers the common carrier identification numbers, for instance, listed in the toll table in the order determined based on the toll table until a dial tone is returned from an exchange, and delivers the manually input called party's telephone number when a dial tone is returned. Further, the communication control section delivers the manually input called party's telephone number, if no dial tone is returned in response to the delivery of the common carrier identification number lastly determined based on the toll table. With this example, an attempt is made to establish a line connection via the lowest-toll telecommunication network, and, if no dial tone is returned, an attempt is made to establish a line connection via the next lower-toll telecommunication network. Further, a line connection via the public telecommunication network can be started, if no dial tone is returned in response to the delivery of the lastly determined common carrier identification number.

In a still further example associated with the third function of the terminal adapter, the memory device stores a routing phone table in which exchange identification numbers, e.g., exchange telephone numbers, are listed. The communication control section responsive to the manual input of a called party's telephone number sequentially delivers the exchange identification numbers in the order listed in the routing phone table until a dial tone, indicating that an exchange is ready for telephone number input, is returned from the exchange, and delivers the manually input called party's telephone number when such a dial tone is returned. Further, the manually input called party' s telephone number is delivered, if no dial tone is returned in response to the delivery of the exchange identification number listed at the end of the routing phone table. With this example, an attempt is made to establish a line connection via a telecommunication network to which the highest utilization priority is given by the user. If no dial tone is returned, an attempt is made to establish a line connection via another telecommunication network to which the next higher priority is given. Further, the line connection via the public telecommunication network is initiated when no dial tone is returned even if the sequential delivery of all the exchange identification numbers listed in the routing phone table is made. The routing phone table may be configured such that toll area codes, country codes for international call, or reverse-charge telephone numbers (toll-free dial numbers) are each associated with a required number of exchange identification numbers. In this case, at the time of long distance call, international call, or toll-free call, an attempt is made to establish a line connection in response to manual input of a toll code, a country code, or a toll-free dial number, with an appropriate telecommunication network being selected in the order of utilization priority.

In a terminal adapter according to a still further example, the communication control section causes a download memory area of the memory device to store structured toll information delivered from a toll database system or a service center when access is made therefrom with intention of delivering the structured toll information. The control section converts the downloaded structured toll information into a toll-table form, and prepares or renews, with use of the structured toll information converted into the toll-table form, the toll table in which pieces of structured toll information in respect of the telecommunication networks, provided by particular common carriers with which the user made a service contract, are associated with network-utilization conditions and common carrier names or common carrier identification numbers. With this example, a toll table proper to each individual user can be prepared and renewed with use of the structured toll information in respect of the particular common carriers.

In a terminal adapter according to a still further example, when access is made from a server provided in the service center to the terminal adapter, with intention of making the initial setting or renewal of the table, an adapter management section of the terminal adapter delivers, through the communication control section, a reply signal indicating that access from the server to the memory device is accepted. With this example, on the occasion of the initial setting or renewal of the table, the server in the service center serves as the master and the terminal adapter serves as the slave. Typically, at least one table in the terminal adapter or an equivalent table is displayed on a display screen of the server. Then, data input into various setting fields in the table displayed on the screen is implemented in sequence by an operator of the service center by manually operating an input device of the server. Each time individual data is manually input, such data is written into a corresponding field in the at least one table in the terminal adapter and at the same time the same data is written into the same field in an equivalent table provided in a memory device of the server. In other words, the writing of table data into the terminal adapter and the server is implemented in a mirroring fashion.

According to another aspect of the present invention, there is provided a computer-readable recording medium which stores programs for permitting a computer to serve as a communication control section of a terminal adapter having the aforementioned first, second and third functions.

With the recording medium of the present invention, a computer mounted to a terminal adapter and loaded with the programs recorded in the recording medium serves as a communication control section of the terminal adapter, to selectively perform the direct-dialing function, the auto-dialing function or the routing function.

In loading the programs to the computer of the terminal adapter, typically, the recording medium provided in an appropriate medium form is set to a CD-ROM drive or other external storage of a personal computer connected to the terminal device, and the programs stored in the recording medium are loaded via the personal computer into a memory device of the computer of the terminal adapter.

Preferably, the programs stored in the recording medium contain a setting/renewal program for performing the initial setting and renewal of pieces of line-connection information or a toll table for the terminal adapter. When the setting/renewal program is booted up, an initial setting/renewal screen appears on a display screen of the personal computer connected to the terminal adapter. By performing the initial setting/renewal of the line-connection information or the toll table on the display screen, telecommunication circumstances adapted to the utilization form of telecommunication of each individual user can be attained.

The aforementioned loading work and the initial setting/renewal work may be performed at the user's home by a staff member of the service center or other professional personnel or the user. Preferably, the computer of the terminal adapter has a function of searching for pieces of line-connection information and toll information to be referred to in the process of the initial setting/renewal from a database stored in the recording medium or from a database provided by the service center or the like and connected to the computer through a telecommunication network.

In stead of making the loading and initial setting/renewal work at the user's home, such work may be performed by the service center connected to the terminal adapter through a telecommunication network. To realize this, the setting/renewal program stored in the recording medium is prepared such that, after booted up, it performs procedures for calling up the service center and for asking the service center to carry out the initial setting/renewal work. Alternatively, the setting/renewal program may be prepared such that the user can specify and contact his or her acquaintance as a worker who will carry out the setting/renewal work through a telecommunication network. Preferably, the setting/renewal program contains a program routine for preventing a third party from conducting unauthorized setting/renewal processing.

After completion of the initial setting/renewal processing at the user's home or through a telecommunication network, the computer of the terminal adapter serves as the communication control section of the terminal adapter. In other words, it serves as a line-connection engine for performing communication control based on the initially set or renewed line-connection information.

According to a further aspect of the present invention, there is provided a terminal adapter management system which comprises a plurality of terminal adapters and a service center that are adapted to be connected to a telecommunication network. Each of the terminal adapters selectively performs an arbitrary one of the aforesaid first, second and third functions to thereby read out the first, second or third line-connection information. The service center is arranged to perform the initial setting and renewal of the first, second and third line-connection information and the toll table stored in a memory device of each terminal adapter through the telecommunication network.

Each of the terminal adapters which constitute the terminal adapter management system can selectively perform an arbitrary one of the direct-dialing, auto-dialing and routing functions, whereby each terminal adapter is easily adapted to the network utilization form of each individual user. On the other hand, there is a fear that each individual user, especially a user who made service contract with a large number of NCCs, cannot properly carry out work for the initial setting and renewal of the first, second and third line-connection information and the toll table information to be stored in the memory device of the terminal adapter. In such a case, each individual user generally makes an inquiry to a manufacturer or a distributor of the terminal adapter. This is not only burdensome for the user but also becomes burden for the manufacturer and the distributor to answer such a customer inquiry. According to the management system of this invention, the initial setting and renewal of the line-connection information and the toll table in the terminal adapter of each individual user can be carried out by the service center through the telecommunication network, whereby burdensome work on both the user and the manufacturer or distributor associated with the setting/renewal of the line-connection information and the like can be reduced.

If the service center carries out the setting/renewal of the line-connection information and the toll table for each terminal adapter in accordance with that utilization form of the user terminal device or the terminal adapter which was notified in advance by each individual user to the service center, such setting/renewal is performed with approval of the user, and the line-connection information and the toll table set in the terminal adapter are adapted to the utilization form of the terminal adapter by the user. Besides, an unauthorized setting/renewal by a third party can be prevented. The setting/renewal of the line-connection information and the toll table may be performed by an operator of the service center, while the operator makes a conversation with each individual user through a telecommunication network to confirm how the user wishes to utilize the terminal adapter.

### Brief Description of the Drawings

Fig. 1 is a schematic view showing a terminal adapter according to an embodiment of the present invention, together with telecommunication networks to which the terminal adapter, another terminal adapter, a service center, and a toll database system are connected;
Fig. 2 is a schematic block diagram showing the internal configuration of the terminal adapter shown in Fig. 1;
Fig. 3 is a view showing an operation mode table stored in a memory device shown in Fig. 2;
Fig. 4 is a view showing an addition phone table stored in the memory device;
Fig. 5 is a view showing a direct phone table;
Fig. 6 is a view of a phone table;
Fig. 7 is a view of a routing phone table;
Fig. 8 is a view of a supplementary information table;
Fig. 9 is a view of a toll table;
Fig. 10 is a flowchart of a startup program for detecting a local area code of a user's telephone number, executed by a transmit/receive control section of the terminal adapter after the terminal adapter is installed in the user's home;
Fig. 11 is a view showing a specific example of the detection of a local area code performed by the startup program shown in Fig. 10;
Fig. 12 is a flowchart of a telephone number delivery program executed by the transmit/receive control section in a direct phone mode;
Fig. 13 is a flowchart of a telephone number delivery program for addition phone mode;
Fig. 14 is a flowchart of a telephone number deliver program for routing phone mode;
Fig. 15 is a flowchart showing part of a telephone number delivery program executed in the addition phone mode based on a toll table;
Fig. 16 is a flowchart of procedures for downloading structured toll information executed under the control of an adapter management section of the terminal adapter; and
Fig. 17 is a flowchart of a terminal adapter management process in a terminal adapter management system of the present invention.

### Detailed Description

With reference to the appended drawings, a terminal adapter management system according to a preferred embodiment of the present invention will be explained hereinbelow.

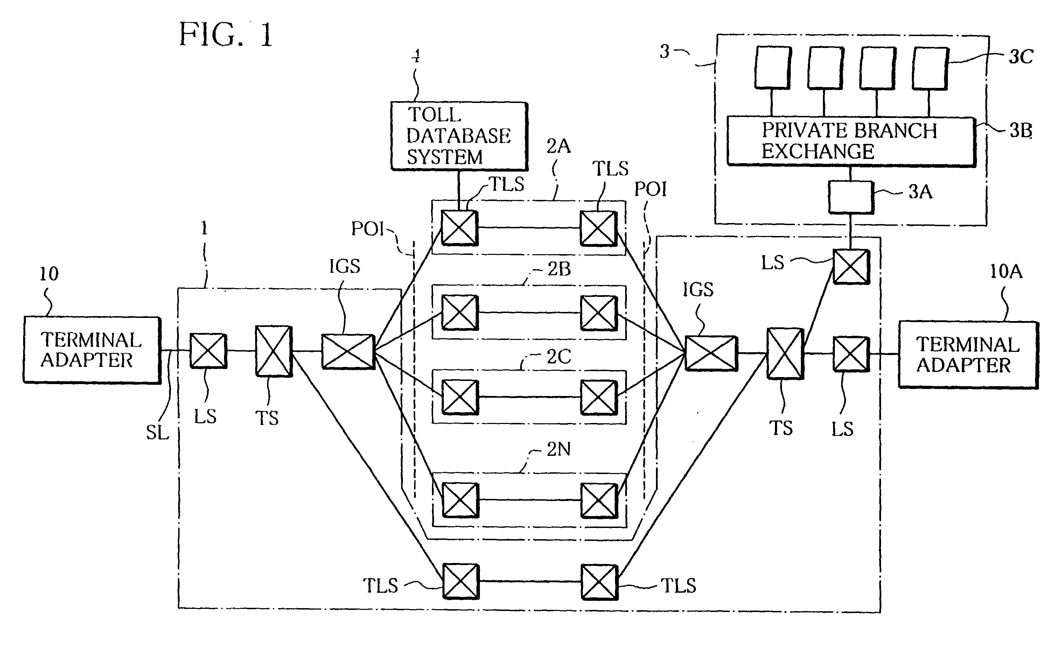

In Fig. 1, a terminal adapter 10 constituting part of the terminal adapter management system of the present embodiment has a function of a digital service unit DSU and is adapted to be connected to a subscriber line SL, which is connected through a local switch LS to a public telecommunication network 1, such as an integrated services digital network ISDN, provided by a telecommunication enterprise, i.e., a common carrier (hereinafter referred to as "CC"). The local switch LS is permitted to be connected to an arbitrary one of telecommunication networks (hereinafter referred to as "NCC networks") 2A-2N respectively provided by new common carriers (hereinafter referred to as "NCCs") through a toll switch TS and an inter-gateway switch IGS. Symbol TLS and POI denote a toll local switch and a point of interface, respectively. In Fig. 1, only a relevant portion of the telecommunication networks that is required for the explanation of the present embodiment is shown.

A large number of subscribers' terminal devices are connected through a number of switchboards or exchanges to the public telecommunication network 1. These terminal devices include a number of terminal adapters (one of which is shown by reference numeral 10A) of the present embodiment. In association with the setup of these terminal adapters, at least one of manufacturers and distributors of the terminal adapters has a service center 3 connected to the public telecommunication network 1. Reference numerals 3A, 3B and 3C denote a digital service unit, a private branch exchange, and a computer (server) serving as a terminal device, respectively. The service center 3 is a primary element of the terminal adapter management system.

Further, toll database systems (one of which is shown by reference numeral 4), each storing therein structured toll information regarding a corresponding one of the public telecommunication network 1 and the NCC networks 2A-2N, are connected to primary exchanges respectively provided in the public telecommunication network and the NCC networks.

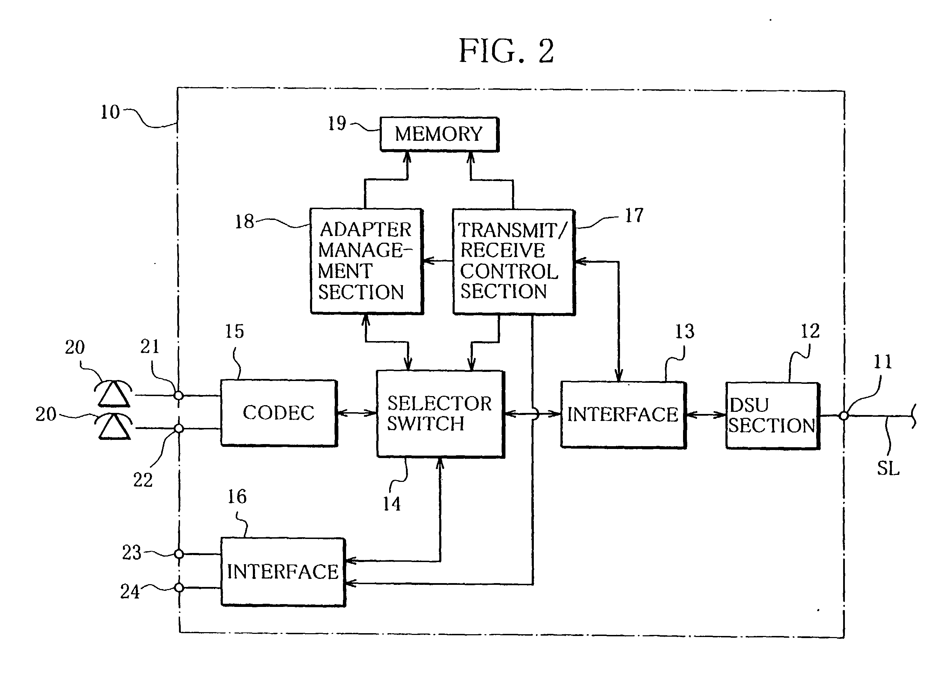

As shown by way of example in Fig. 2, the terminal adapter 10 of the present embodiment includes a connection port 11 adapted to be connected to a subscriber line SL, a DSU section 12 connected to the connection port 11 and having a function of a DSU (digital service unit), and a first interface section 13 connected to the DSU section 12 and adapted to implement synchronization and data speed conversion during the telecommunication. The first interface section 13 is connected through a selector switch 14 and a codec 15 to first and second analog ports 21, 22 each of which is adapted to be connected to a telephone 20. Further, the first interface section 13 is connected through the selector switch 14 and a second interface section 16 to a digital port 23 to which a digital terminal device is connectable and to a serial port 24 to which a personal computer or the like is connectable.

The terminal adapter 10 accommodates therein a transmit/receive control section 17 connected to the first and second interface sections 13, 16 and the selector switch 14. The control section 17 serves to control transmission and reception between a telephone 20 or a digital terminal device connected to the terminal adapter 10 and a terminal device (the terminal adapter 10A, for instance) line-connected to the terminal adapter 10 via networks concerned. Further, the terminal adapter 10 accommodates therein an adapter management section 18 connected to the selector switch 14, and a memory device 19 accessible from both the transmit/receive control section 17 and the adapter management section 18. Hereinafter, these two sections 17 and 18 will be sometimes collectively referred to as a communication control section typically comprised of a computer that is adapted to execute programs stored in the memory 19 to thereby selectively achieve an arbitrary one of direct-dialing, auto-dialing, and priority connection functions, as mentioned below.

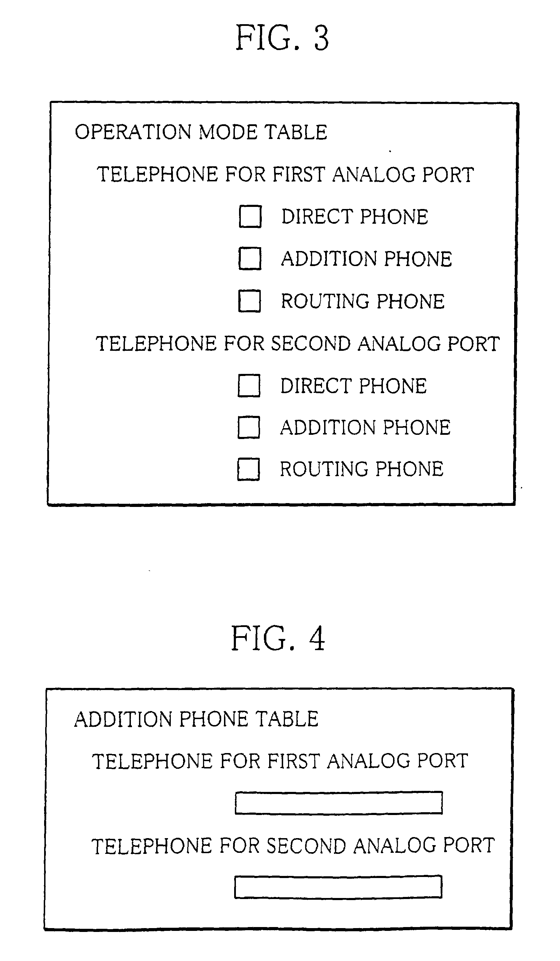

The terminal adapter 10 of the present embodiment has a function of permitting each of telephones 20 respectively connected to the first and second analog ports 21, 22 to be used in a selected one of three modes, i.e., a "direct phone mode," "addition phone mode," or "routing phone mode." In association with the mode selection, an operation mode table (shown in Fig. 3) for storing a selected operation mode of each telephone 20 is provided in the memory device 19 of the terminal adapter 10. Preferably, the terminal adapter 10 is provided with operation-mode selection switches (not shown) connected to the adapter management section 18 and manually operable by the user.

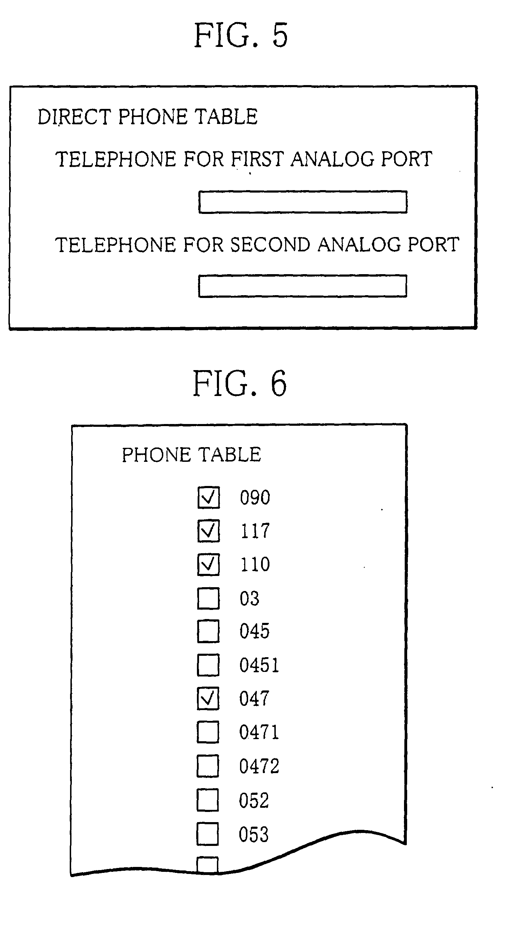

In the direct phone mode, the transmit/receive control section 17 of the terminal adapter 10 delivers a called party's telephone number (first line-connection information) set in advance in a direct table (Fig. 5) in the memory device 19 when the telephone 20 connected to the first or second analog port 21 or 22 is taken off-hook. Thus, it is possible to make rings of a call to the called party's telephone (more generally, a terminal device on the other end of the line) irrespective of whether the intended telecommunication belongs to local, toll, or overseas call via the public network 1 or any one of the contracted NCC networks 2A-2N. That is, the direct phone mode achieves a direct-dialing function (a first function) for calling up the same called party's telephone number for every call. A user telephone set to achieve the direct-dialing function is utilized as a telephone for emergency contact with a caregiving center or the like, a telephone located near ATMs in a bank for permitting an ATM user to contact with bank personnel upon failure of an ATM, or a telephone to be connected to an access point of an internet provider, for instance.

In the addition phone mode, the transmit/receive control section 17 of the terminal adapter 10 causes a buffer memory (not shown) accommodated therein to store a telephone number that is manually input, e.g., through a dial button operation on the telephone 20, and sends, if necessary and prior to the delivery of the manually input telephone number, a number (second line-connection information) stored in advance in an addition table (Fig. 4) provided in the memory device 19 while referring to a phone table (Fig. 6) in the memory device. This makes it possible to relieve the user of the labor to input a telephone number upon making a line connection for toll or overseas telecommunication or for telecommunication via an NCC network. Typically, the addition phone mode achieves an auto-dialing function (a second function) for delivering an NCC identification number prior to the delivery of a called party's telephone number for utilization of an NCC communication network.

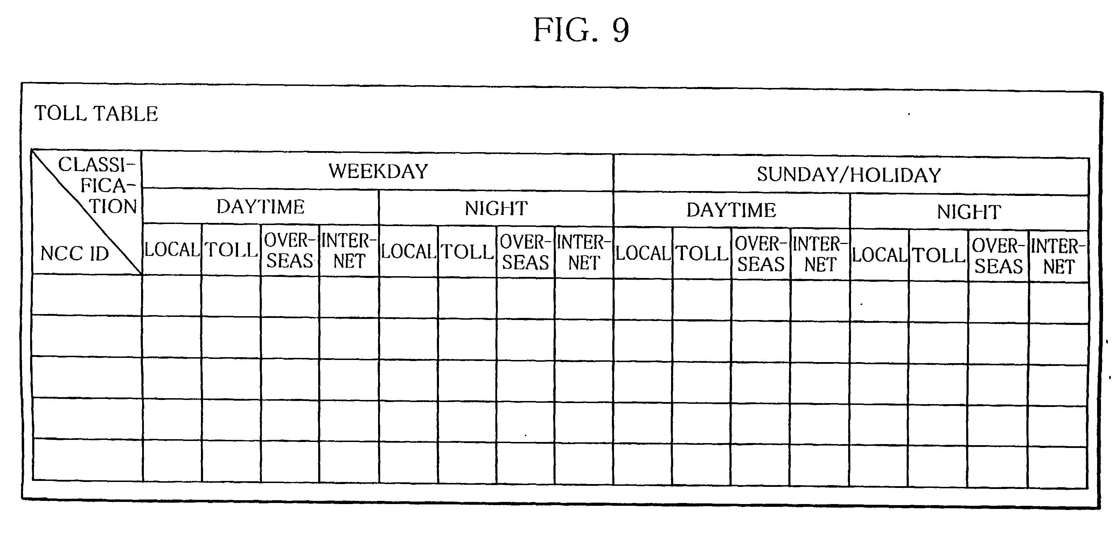

Further, the terminal adapter 10 has a function of automatically selecting one of telecommunication networks, respectively provided by a plurality NCCs with which a user made a service contract, so that telecommunication costs, varying in dependence on time zone and communication district of a called party, may be lowest. In association with this LCR (least cost route) selecting function, a toll table (Fig. 9) for storing pieces of structured toll information in respect of the contracted NCC networks, as a toll database proper to an individual user, is provided. In this regard, second line-connection information is determined by the LCR selecting function, and an NCC identification number associated with an NCC telecommunication network usable with the least cost can be automatically delivered. Types of classifications and a maximum possible number of fields for indication of NCC identification numbers in the toll table are not limited to those shown in Fig. 9.

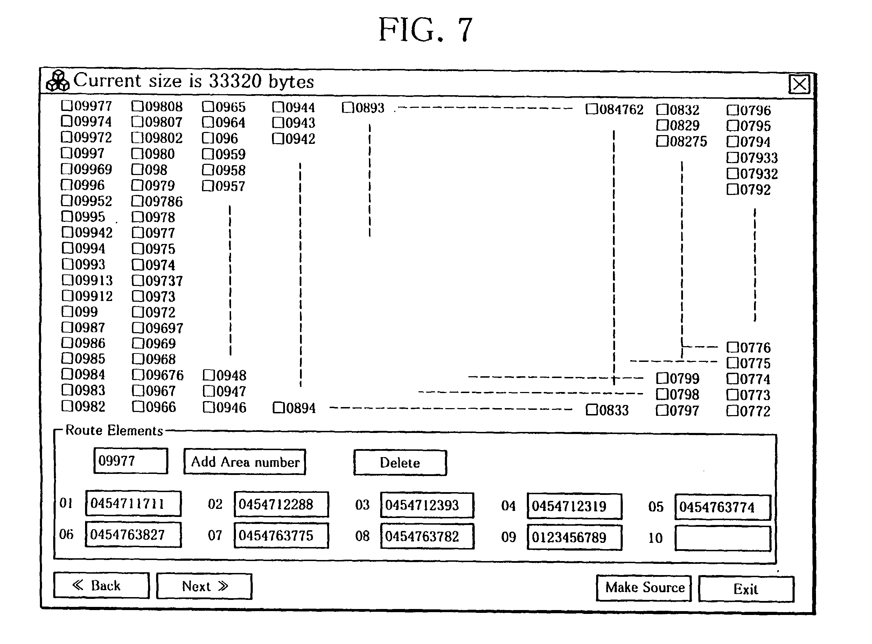

In the routing phone mode, the transmit/receive control section 17 of the terminal adapter 10 sequentially delivers at predetermined time intervals, in response to manual input of a telephone number, a plurality of telephone numbers (third line-connection information) set in advance in a predetermined order in a routing table (Fig. 7) of the memory device 19, while referring to the phone table, until a line connection is approved. Telephone numbers delivered from the transmit/receive control section 17 typically include an NCC exchange telephone number. The routing phone mode achieves a function of priority connection (a third function) for performing routing to an NCC exchange without the need of ordinary routing by mean of a local switchboard.

The routing table is comprised of a table that is five pages in total. For instance, two hundred retrieval numbers may be set in each page of the table, and ten NCC exchange telephone numbers, at the most, may be registered for every retrieval number. Each retrieval number may be a toll area code for national call, a country code for international cal, or a toll-free dial number, for instance.

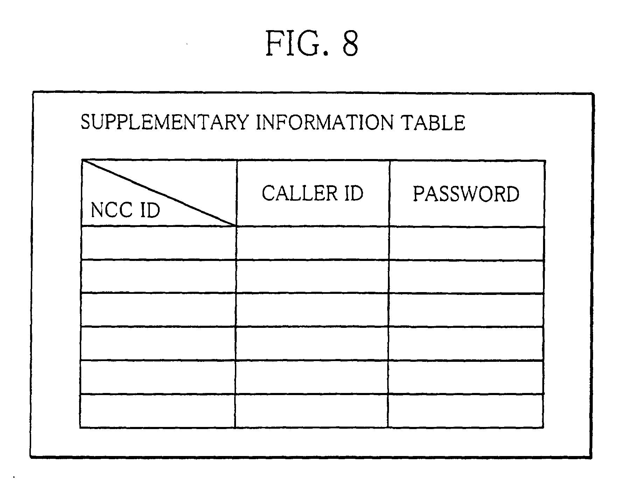

When an NCC network is utilized, irrespective of whether the direct phone mode, addition phone mode, or routing phone mode is selected, the terminal adapter 10 delivers, if necessary, supplementary information while referring to a supplementary information table (Fig. 8).

In the following, the attainment of the local area code implemented by the terminal adapter 10 will be explained, the local area code being utilized upon delivery of telephone number.

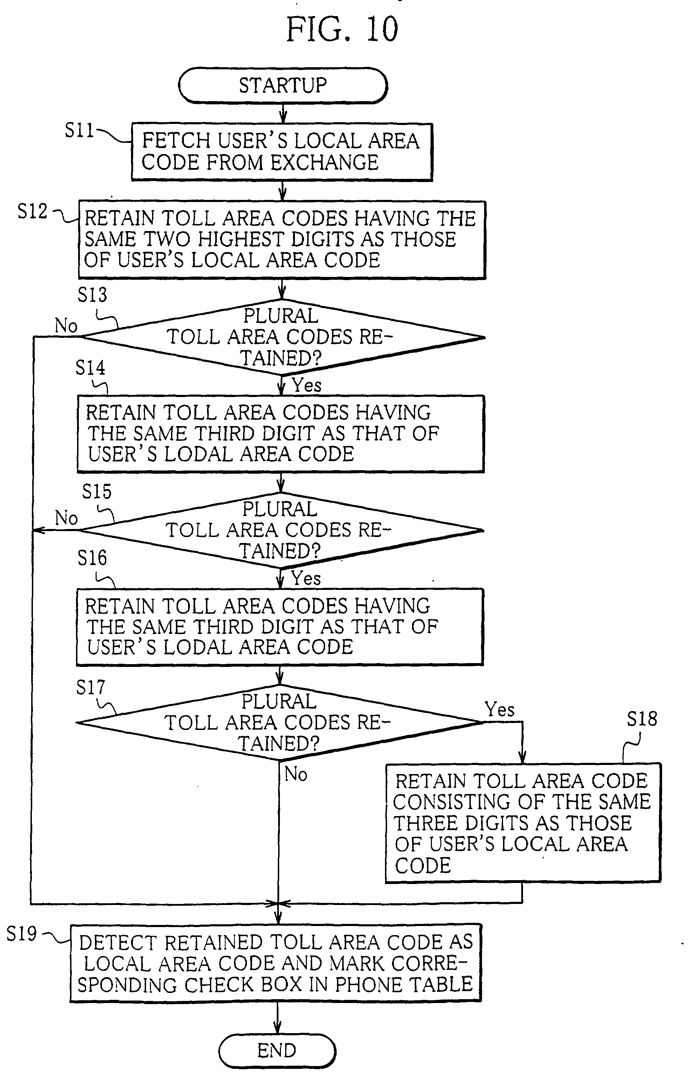

After the terminal adapter 10 installed in the user's home is connected with the subscriber line SL and one or two telephones 20 are connected with one or both of the first and second analog ports 21, 22 of the terminal adapter 10, if the user off-hooks a telephone 20, the transmit/receive control section 17 of the terminal adapter 10 boots up a startup program (Fig. 10) accommodated therein, detects the local area code from the user's telephone number delivered from the local switchboard LS, and marks a corresponding one of check boxes on a telephone number list of a phone table (Fig. 6).

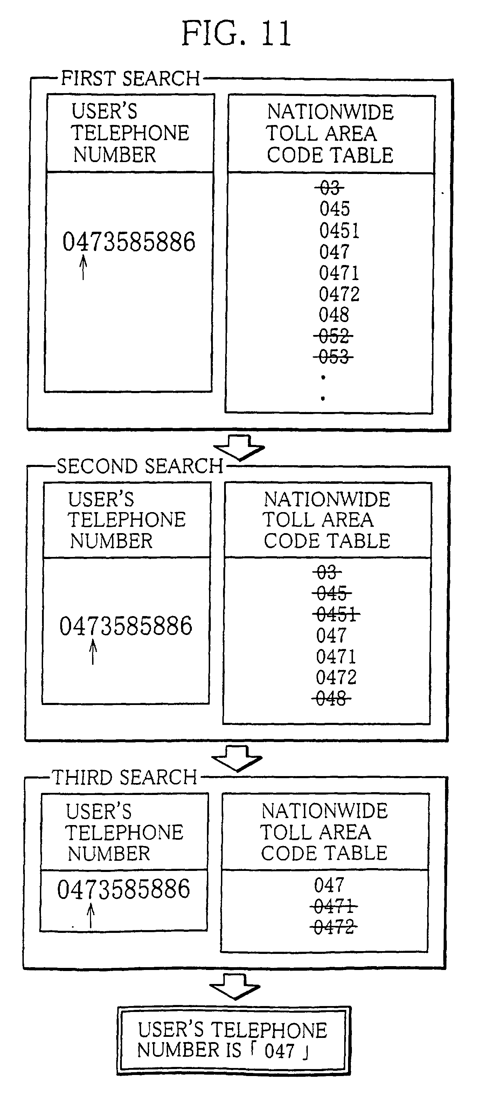

More specifically, during the execution of the startup program of Fig. 10, the transmit/receive control section 17 (or the adapter management section 18) fetches the user's telephone number ("0473585886" for the case shown in Fig. 11) delivered from the local switchboard LS when the telephone 20 is taken off-hook (step S11). With reference to a nationwide toll area code table stored in the memory device 19, the control section 17 sequentially determines whether or not the first and second highest-order digits of each of the toll area codes listed in the nationwide toll area code table are consistent with those of the user's telephone number, and retains the toll area codes each including two highest-order digits consistent with those of the user's telephone number (step S12). Next, a determination is made as to whether or not a plurality of toll area codes are retained (step S13). If the result of this determination is affirmative, whether or not the third digit of each of the retained toll area codes is consistent with that of the user's telephone number is determined, and retains the codes each including the third digit consistent with that of the user's telephone number (step S14). Next, a determination is made as to whether or not a plurality of toll area codes are retained (step S15). If the result of this determination is affirmative, whether or not the fourth digit of each of the retained toll area codes is consistent with that of the user's telephone number is determined, and retains such codes (step S16). Further, whether or not a plurality of toll area codes are retained is determined (step S17). In this example, the toll area codes are comprised of four digits at the greatest. Thus, if the result of the determination at the step S17 is affirmative, the toll area code consisting of the three highest-order digits which are consistent with those of the user's telephone number is detected (step S18). At any one of the steps S13, S15, S17 and S18, a single toll area code is detected, so that such a toll area code is detected as the user's local area code and a check box corresponding thereto in the phone table is marked (step S19). Whereupon the startup program is completed. In the case shown in Fig. 11, the toll area code "047" is detected as the user's local area code, and the number "047" in the phone table of Fig. 6 is marked.

The transmit/receive control section 17 of the terminal adapter 10 has an automatic transmission function of calling up a service center 3 when a predetermined period of time has elapsed from when the terminal adapter 10 was installed in the user's home, and notifies the service center 3 of terminal-adapter management information, e.g., the product number of the terminal adapter and the user's telephone number. In accordance with the information notified from the terminal adapter 10, the service center 3 performs user's registration for the terminal adapter 10.

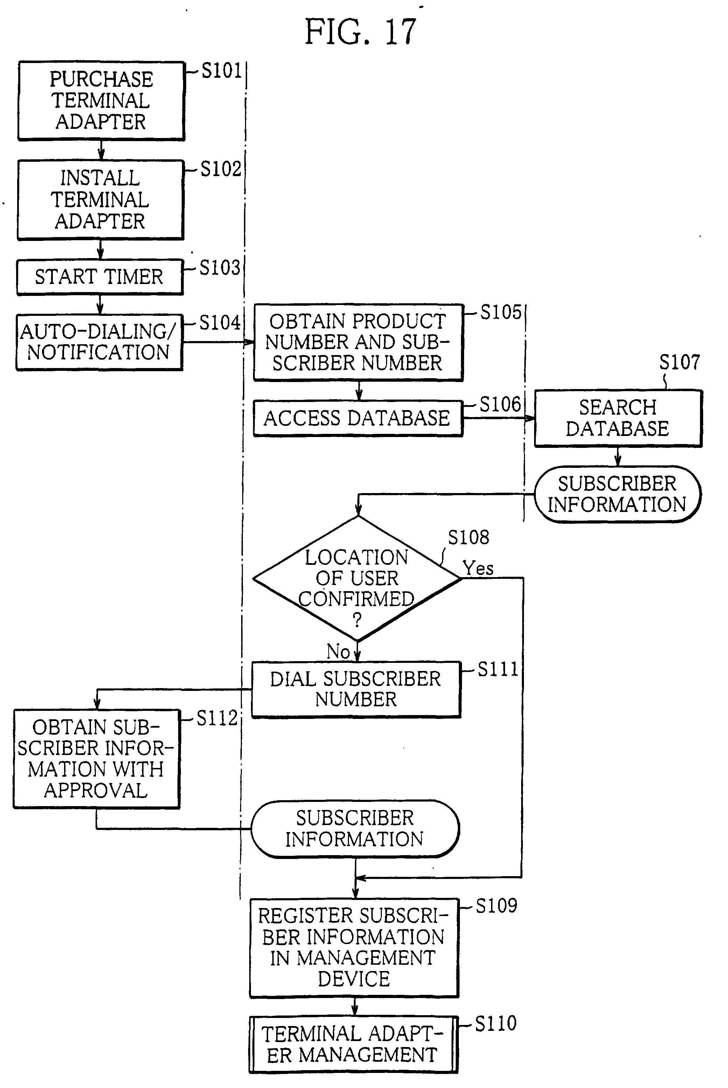

In the following, a process for terminal-adapter management performed by the terminal adapter management system of the present embodiment will be explained with reference to Fig. 17.

A terminal adapter 10 purchased by the user is installed at his or her home (steps S101 and S102). That is, the terminal adapter 10 is connected to one or two telephones 20 and the subscriber line SL, and the power of the terminal adapter 10 is turned on. In response to this, a timer (not shown) accommodated in the adapter management section 18 of the adapter is subject to initial setting. If the terminal adapter 10 is provided with mode selection switches, one or both of these switches are set by the user to select the operation mode of one or two telephones 20, connected to the first and second analog ports 21, 22 of the terminal adapter 10, among the direct phone mode, the addition phone mode and the routing phone mode.

When one hour, for instance, has elapsed from the time the terminal adapter 10 was installed (step S103), an automatic transmission/notification function of the terminal adapter 10 is triggered to call up the service center 3 and notify the service center 3 of the product number and one or two user's telephone numbers (hereinafter referred to as the user's telephone number) associated with the terminal adapter (step S104). This automatic transmission/notification is performed under a condition that the terminal adapter 10 is not used by the user for telecommunication. To avoid telecommunication toll from incurring, a toll-free line is employed for the automatic transmission/notification. If a line connection to the service center 3 via such a toll-free line cannot be established, redialing is repeated at intervals of an appropriate waiting time until a line connection is established.

After obtaining the production number and the user's telephone number associated with the terminal adapter 10 (step S105), the service center 3 refers to the user's telephone number and accesses a telephone directory of a telecommunication enterprise that manages the subscriber line SL5 to which the terminal adapter 10 is connected (step S106). Whereupon the service center 3 searches the telephone directory to obtain user information such as the name and address of the telephone subscriber corresponding to the user's telephone number (step S107). If such user information is not open to the public under the contract between the telecommunication enterprise and the telephone subscriber, no user information is available from the telephone directory.

Next, the service center 3 determines whether or not the location of the user is confirmed (step S108). If the name and address of the user have been obtained by the search of the telephone directory, it is determined that the location of the user is confirmed. In this case, the service center registers the subscriber information (user information) including the name and address of the user in a user management device such as a host computer of the service center, together with the production number of the terminal adapter and the user's telephone number (step S109). Whereupon, management services for the terminal adapter 10 are carried out (step S110).

On the other hand, if it is determined in step S108 that the location of the user is not confirmed, an operator of the service center 3 dials the user's telephone number notified from the terminal adapter 10 (step S111). The operator explains the person or the user who answers the phone that the service center wishes to conduct formalities required to guarantee the terminal adapter 10, and obtains the user information, including the name and address of the user, directly from him or her with his or her approval (step S112).

The service center 3 registers the user information in the user management device together with the production number and the user's telephone number (step S109), and carries out terminal adapter management services (step S110).

The terminal-adapter management services include making the initial setting and renewal of first, second and third line-connection information suited to the usage form of the terminal adapter 10 by each individual user. The initial setting and renewal of the line-connection information are conducted based on information notified by the user. Alternatively, the operator of the service center 3 may input control/setting commands for the initial setting or renewal of the line-connection information to the terminal adapter 10 through a data channel of an ISDN, while making a conversation with the user via a voice channel of the ISDN.

When calling is made from a caller, the transmit/receive control section 17 serving as a called party's device detects a caller's telephone number transmitted through a D channel of the ISDN and a supplementary signal transmitted, if necessary, together with the caller's telephone number. If it is determined based on the caller's telephone number and the supplementary signal that the service center 3 makes a call with the intention of implementing the initial setting or renewal of various tables in the memory device 19 of the terminal adapter 10, the transmit/receive control section 17 connects the selector switch 14 with the adapter management section 18. The adapter management section 18 delivers a reply signal, indicating that access to the memory device 19 by the service center 3 is accepted, to the service center 3 through the transmit/receive control section 17. As a consequence, the server 3C in the service center 3 serves as the master and the terminal adapter 10 serves as the slave, so that the service center 3 may be enabled to implement the initial setting or renewal of various tables in the memory device 19 as will be described hereinbelow.

To enable the service center 3 to conduct the initial setting or renewal of the line-connection information, the user notifies the service center 3 of the following particulars through the mail or by telephone.
(i) The operation mode, i.e., the direct phone, addition phone or routing phone mode set by the user for each telephone 20 connected to the terminal adapter 10 is notified. Alternatively, the operation mode of each telephone in which the user wishes to use the telephone is notified.
(ii) For the direct phone mode, a called party' s telephone number to be designated in this mode is notified. Since the direct phone mode is provided with the intention of permitting the user to make a call for emergency contact, for instance, merely by taking the telephone off-hook, the called party's telephone number may include, if necessary, a desired one or ones of a country code for international call, a toll area code, an NCC identification number, and an NCC exchange telephone number. If an NCC identification number or an NCC exchange telephone number is unknown to the user, he or she may notify an NCC name to the service center 3. This applies to the following particulars.
(iii) For the addition phone mode, one or ones of a county code for international call, a toll area code, and an NCC identification number (e.g., an identification number of an international telecommunication enterprise such as KDD (Kokusai Denshin Denwa) in Japan) are notified.
(iv) For the routing phone mode, a plurality of toll area codes or NCC exchange telephone numbers are notified.
(v) A caller's ID and, if necessary, a password for each of particular NCCs with which the user made a service contract are notified. In the present embodiment, the user's telephone number is used as caller ID which is common to the particular NCCs. The user' s telephone number is delivered from an exchange (hereinafter referred to as "CC exchange") provided in the public telecommunication network 1 to an associated NCC exchange when the telephone 20 is taken off-hook. Instead of or in combination with the delivery of the user's telephone number from the CC exchange, the transmit/receive control section 17 may read out the user's telephone number, stored in advance in a predetermined region of the memory device 19 of the terminal adapter 10, and may deliver the same in response to a request for delivery of caller ID.

On the basis of the notification from the user, the service center 3 implements, in term of remote control access, the initial setting or renewal of various tables in the terminal adapter 10 in accordance with the below-mentioned procedures.
(i) An operator of the service center 3 operates an input device of one of computers (servers) 3C for terminal-adapter maintenance to call up the terminal adapter 10 through telecommunication networks, preferably, in term of communication protocol proper to the service center 3. When a reply signal indicating that access to the memory device 19 of the terminal adapter 10 from the server 3C is accepted is delivered from the adapter management section 18, the receipt of the reply signal is displayed on the display screen of the server 3C. Thus, the operator manually operates the input device of the server 3C to implement the following work.
(ii) The operator make an operation to display an operation mode table (Fig. 3) of the terminal adapter 10 on the screen of the computer 3C, and, in accordance with the notification from the user, marks a corresponding one of check boxes in the displayed operation mode table to specify the operation mode, i.e., the direct phone, addition phone or routing phone mode, in which each telephone 20 connected to the terminal adapter 10 is to be used.
(iii) If the telephone 20 is to be used in the direct phone mode, the operator operates the server 3C to write, in accordance with the notification from the user, a called party's telephone number in a direct table (Fig. 5) displayed on the display.
(iv) If the telephone 20 is to be used in the addition phone mode, the operator operates the server 3C to write a country code or a toll area code notified by the user or an NCC identification number such as an NCC exchange telephone number corresponding to an NCC name notified by the user into an addition table (Fig. 4) and a phone table (Fig. 6) displayed on the screen of the computer 3C.
(v) If the telephone 20 is to be used in the routing phone mode, the routing phone table (Fig. 7) is displayed on the screen, and NCC exchange telephone numbers are written into the routing phone table in accordance with NCC names notified by the user.
   A specific example of NCC exchange telephone numbers is "0123456789" which is different from an NCC identification number [00XX]. NCC exchange telephone numbers may correspond to a toll-free dial service or a reverse charging service.
(vi) In accordance with the notification from the user, caller's IDs and passwords are written into a supplementary information table (Fig. 8) displayed on the screen, in such a manner that the caller's IDs and/or passwords are associated with identification numbers of the NCCs with which the user made a service contract. In the present embodiment, the user's telephone number is used as the supplementary information (caller ID), so that the user' s telephone number which is common to the NCCs may be written into the supplementary information table.

After receiving a reply signal from the terminal adapter 10, the server 3C of the service center 3 serves as the master, whereas the terminal adapter 10 serves as the slave. Preferably, the server 3C is connected to the terminal adapter 10 through a B channel of the ISDN. Then, data input into various setting fields provided in a table displayed on the screen is implemented in sequence by the operator by manually operating the input device of the server 3C serving as the master, as explained in the above. Each time individual data is manually input, such data is written into a corresponding field in the table in the terminal adapter 10 serving as the slave. At the same time, the same data is written into the same field in an equivalent table provided in a memory device of the server 3C. In other words, the writing of table data into the terminal adapter and the server is implemented in a mirroring fashion.

The service center 3 has a function of remotely notifying the terminal adapter 10 of a new telephone number if the telephone number of any one of toll database systems 4 or the like is changed. This function is useful especially for a case where area codes are changed nationwide.

In the following, operations of the terminal adapter 10 for which the setup, including the attainment of the user's local area code and the initial setting or renewal of the tables, is completed will be explained.

When the telephone 20 connected to the first or second analog port of the terminal adapter 10 is taken off-hook, the transmit/receive control section 17 of the terminal adapter 10 determines the operation mode of the telephone 20 in accordance with the operation mode table shown in Fig. 3.

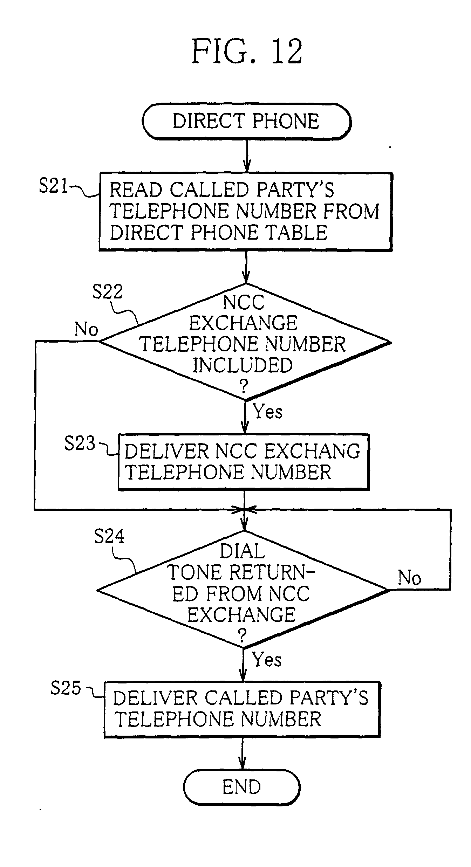

If it is determined that the direct phone mode is set as the operation mode, the transmit/receive control section 17 reads out, as shown in Fig. 12, the called party's telephone number from the direct table of Fig. 5 and temporarily stores the same in a buffer memory (step S21). If an NCC exchange telephone number is added to the called party' s telephone number, the NCC exchange telephone number is first delivered (steps S22 and S23). As a result, a telecommunication path, through which the terminal adapter 10 is connected to an NCC exchange corresponding to the NCC exchange telephone number, is promptly established in the public telecommunication network 1. Then, the user's telephone number is delivered from the relevant CC exchange to the NCC exchange. The NCC exchange receives the user's telephone number as a caller ID (supplementary information) and determines whether a line connection between the telephone 20 and the NCC telecommunication network is to be accepted. If such a line connection is acceptable, the NCC exchange delivers a dial tone indicating that it waits for input of a called party's telephone number.

If a dial tone is returned from the NCC exchange, the transmit/receive control section 17 delivers the called party's telephone number temporarily stored in the buffer memory (steps S24 and S25), whereby the telephone number delivery process at the direct phone mode is completed. Communication procedures after the telephone number delivery are the same as ordinary procedures, so that explanations thereof are omitted herein (this applies to the following operation modes).

A line connection is rejected by the NCC exchange from which a disconnection tone is returned, if the user's telephone number delivered from the CC exchange is not coincide with any one of a large number of user's telephone numbers registered as caller IDs in the NCC exchange.

In a case where a user's telephone number as a caller ID is delivered from both the CC exchange and the terminal adapter 10 to the NCC exchange, a line connection is rejected when the delivered user's telephone numbers are different from each other or when the same user's telephone number delivered from them is not registered in the NCC exchange.

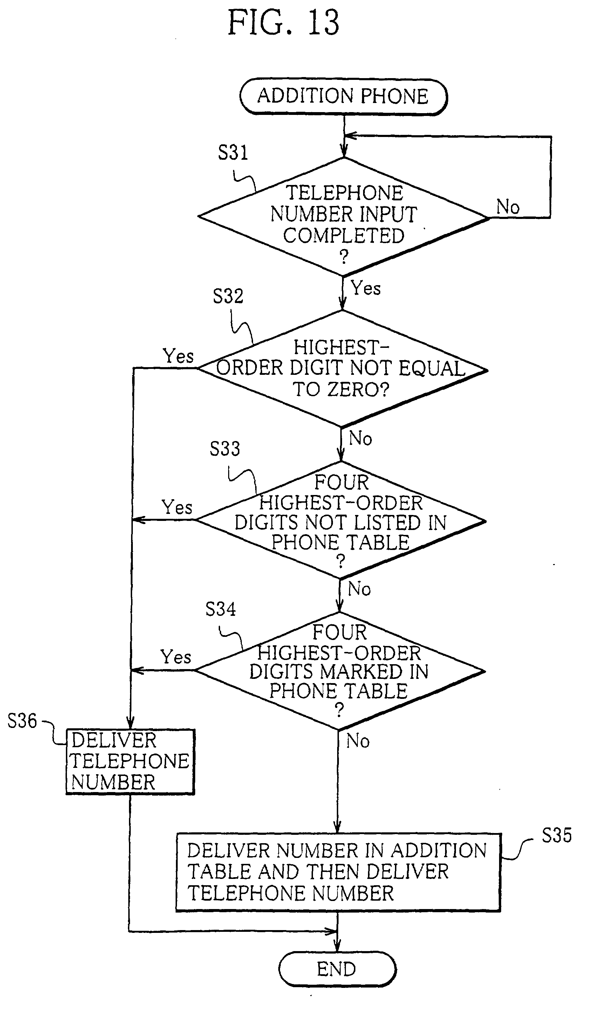

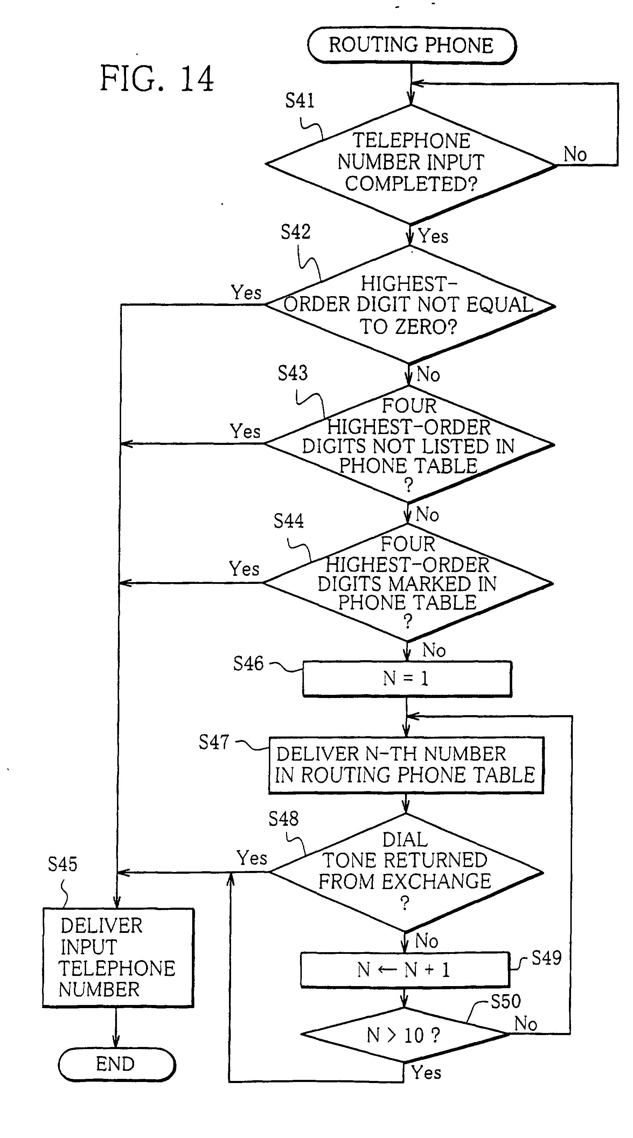

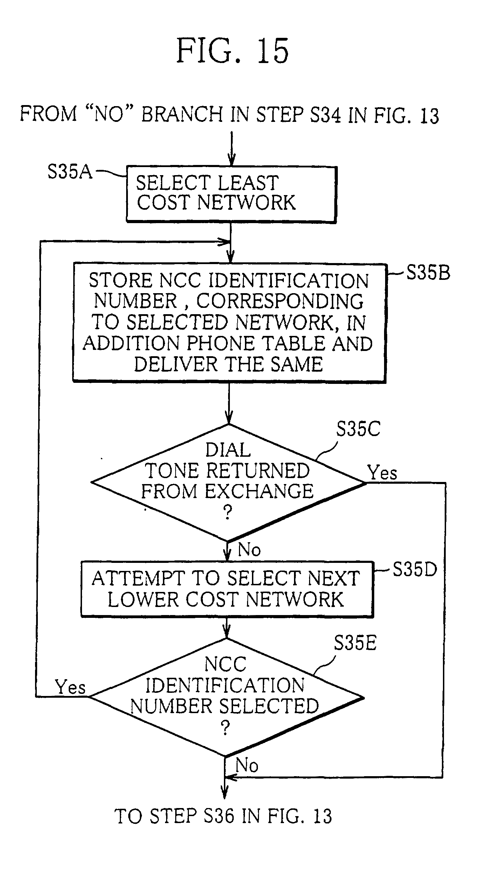

If the operation mode of the telephone 20 is determined to be the addition phone mode when the telephone 20 is taken off-hook, the transmit/receive control section 17 of the terminal adapter 10 waits for, as shown in Fig. 13, the completion of a dial button operation on the telephone 20 to input a called party's telephone number. When the telephone number input is completed (step S31), determinations are made as to whether the highest-order digit of the telephone number is not equal to "0," and whether the telephone number or its several highest-order digits (four digits, for instance) is/are not listed or is/are marked in the phone table of Fig. 6 (steps S32 through S34). If any one of results of these determinations is affirmative, the called party's telephone number which is input from the telephone 20 is delivered (step S36). In this case, a line connection to a called party's telephone is made through the public telecommunication network 1. In a case where an NCC identification number is set in advance in the addition table, a corresponding number listed in the phone table is marked, to thereby prevent an undesired operation of delivering such an NCC identification number twice which would be otherwise caused when the user inputs a called party's telephone number including an NCC identification number, which is equal to any one of the number set in the addition table.

On the other hand, all the results of the determinations at steps S32 through S34 are negative, that is, if the highest-order digit of the telephone number is "0," and the telephone number or its several highest-order digits is/are listed but is/are not marked in the phone table, the number indicated in the addition table shown in Fig. 4 is delivered, and then the telephone number input from the telephone 20 is delivered (step S35). Thus, the telephone number is delivered together with the number stored in the addition table and added to the start end of the telephone number. Typically, the number in the addition table indicates a toll area code or an NCC identification number.

If the number indicated in the addition table corresponds to an NCC exchange telephone number, such an NCC exchange telephone number is first delivered and then a called party's telephone number (which is input from the telephone 20) is delivered when a dial tone is returned from the NCC exchange, as in the case of the direct phone mode shown in Fig. 12.

In the addition phone mode, a called party's telephone number is delivered before a predetermined period of time elapses from the time when the called party's telephone number is manually input, whereby the user is prevented from making an unnecessary manual operation on the telephone 20 for re-inputting the called party's telephone number.

In the foregoing explanation, the number, e.g., NCC identification number, to be delivered in the addition phone mode prior to the delivery of a called party's telephone number is stored in the addition table. However, it is preferable to determine such a number (e.g., NCC identification number) in accordance with the LCR or ACR function based on the below-mentioned toll table.

Before explanations as to the determination of NCC identification number by means of the LCR selecting function will be given, the preparation of the toll table and the arrangement of the terminal adapter 10 therefor will be explained.

When it is determined that access is made from a toll database system 4 of the CC or any one of the NCCs to the terminal adapter 10, with intention of delivering structured toll information, the transmit/receive control section 17 of the terminal adapter 10 operates to connect the selector switch 14 with the adapter management section 18. The service center 3 may offer services for delivering structured toll information for the CC and the NCCs, with which each individual user made a service contract, to the terminal adapter for each user, among numerous pieces of structured toll information as to the CC and a large number of NCCs. The transmit/receive control section 17 may respond to access from the service center 3. On the basis of the structured toll information delivered from the service center 3 or the toll database system 4, the adapter management section 18 newly prepares at least part of a toll table shown in Fig. 9 or renews at least part of the prepared toll table, as will be explained later.

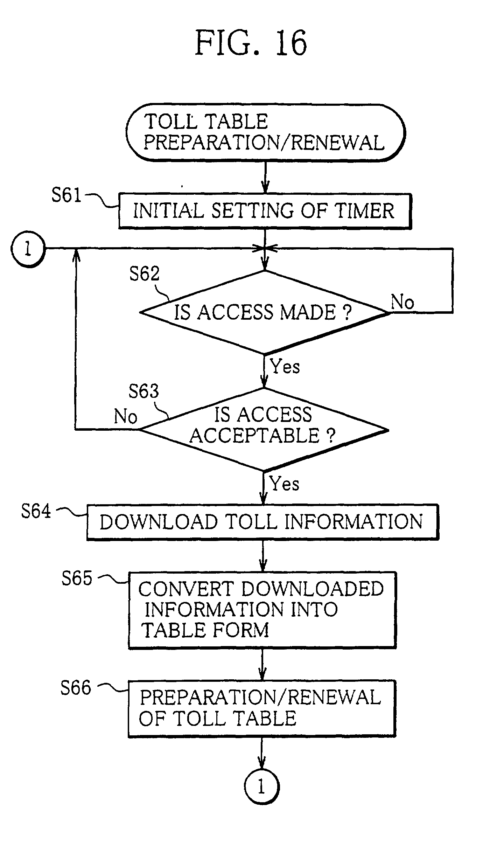

Fig. 16 shows procedures of preparation and renewal of the toll table implemented by the adapter management section 18.

In Fig. 16, the adapter management section 18 makes the initial setting of a timer (not shown) accommodated therein (step S61) when the terminal adapter 10 is installed in the user's home. The time counted by the timer is utilized for the determination of present date and time which are one of network-utilization conditions to be checked at the time of selecting an optimum network. The adapter management section 18 of the terminal adapter 10 installed in the user's home always monitors, through the transmit/receive control section 17, whether or not access to the terminal adapter is made (step S62). If it is determined that access to the terminal adapter is made, whether or not the access is acceptable is determined based on corresponding ones of a caller's telephone number, a supplementary signal and a carrier identification number that are detected by the transmit/receive control section 17 (step S63).

In this determination, the adapter management section 18 determines whether the access is made from the service center 3 or any one of the toll database systems 4 of the CC or any one of the NCCs with which the user made a service contract, with the intention of downloading of structured toll information to the terminal adapter 10. If the result of the determination is affirmative, the adapter management section 18 delivers a reply signal, indicating that the access to the terminal adapter 10 is accepted, to the calling party through the transmit/receipt control section 17, thereby permitting the service center 3 or the toll database system 4 to make the downloading of the structured toll information to the terminal adapter 10.

Next, the adapter management section 18 stores the toll information transmitted from the service center 3 or the toll database system 4 in a download area of the memory device 19 (step S64). Preferably, the toll information downloaded from the service center 3 or the toll database system 4 is written in the download area of the memory device 19 together with the relevant NCC identification number. In the event of writing the structured toll information, if the toll information for the same NCC or CC is already registered in the download area, the registered information is replaced by the newly downloaded information. The terminal adapter 10 may have a function of limiting time zones during which the downloading of toll information is permitted to late-night where the frequency of utilization of telephone is low.

Next, the adapter management section 18 converts the downloaded toll information into the form of the toll table exemplarily shown in Fig. 9 (step S65). With use of the toll information converted into the toll-table form, the adapter management section 18 prepares or renews the toll table in which pieces of structured toll information for the common carriers are associated with common carrier names or common carrier identification numbers or exchange identification numbers (e.g., exchange telephone numbers) and network-using conditions (step S66).

In the preparation or renewal of the toll table, the downloaded and converted toll information regarding the CC or any one of the NCCs is compared with the pieces of toll information regarding the CC and the NCCs set in the toll table (Fig. 9) stored in the memory device 19, thereby obtaining a consolidated and rearranged toll information regarding the common carriers. That is, as exemplarily shown as the toll table in Fig. 9, tolls for the common carriers' networks are associated with these common carriers' networks and the network-using conditions. The network-using conditions are classified in term of time classification such as days of a week and time zones and types of telecommunication such as local, toll, overseas and internet services.

The downloading of the toll information regarding the CC or any one of the NCCs is implemented on the initiative of the common carrier to encourage users to utilize the common carrier's network, immediately after each common carrier has revised the schedule of charge or has started new services for users. If there is a restriction such that the billing process for charging tolls for services rendered by the common carriers should be made in accordance with the latest toll information registered in the toll table in the memory device 19, unnecessary troubles regarding fee charges from the common carriers can be avoided.

Since the common carriers can start their new services to each individual user only after the latest version of toll information is downloaded to the user's terminal adapter 10, then the downloading is implemented without a delay in order to strengthen their position by offering new services.

In the following, procedures for determining and delivering an NCC identification number in the addition phone mode by means of the LCR selecting function based on the toll table will be explained.

If determination results in steps S32, S33 and S34 of Fig. 13, in which the telephone number delivering procedure in the addition phone mode is shown, are negative, the transmit/receive control section 17 of the terminal adapter 10 selects a telecommunication network, which is useable at the lowest cost, from the toll table shown in Fig. 9 in accordance with the toll area code or the country code contained in the called party's telephone number manually input through the telephone 20 (step S35A of Fig. 15), and determines an NCC identification number corresponding to the telecommunication network selected at step S35A. In the case of the toll table shown in Fig. 9, the selection of the lowest-cost telecommunication network and the determination of the NCC identification number are carried out simultaneously. This NCC identification number is written in the addition table and at the same time delivered to the subscriber line (step S35B). Whereupon, it is determined whether or not a dial tone indicative of a standby state for input is returned from an exchange (step S35C). If a dial tone is returned, the control flow advances to step S36 of Fig. 13 where the telephone number which is input through the telephone 20 is delivered. That is, after the NCC exchange telephone number is delivered, the called party's telephone number (i.e., the telephone number input through the telephone 20) is delivered in response to a dial tone returned from the NCC exchange.

If it is determined at step S35C that no dial tone is returned from the exchange, an attempt is made to determine, from the toll table, an NCC identification number corresponding to a telecommunication network which is the next lowest in communication cost (step S35D), and determines whether or not such an NCC identification number is determined (step S35E). If an NCC identification number is determined, the flow advances to step S35B in which the NCC identification number is delivered. On the other hand, if no NCC identification number is determined, the flow advances to step S36 of Fig. 13, in which a called party's telephone number is delivered. In this case, a line connection to a called party's telephone is established through the public telecommunication network.

As explained above, in the addition phone mode, an attempt is made to establish a line connection to NCC networks in an ascending order of toll, and, if a line connection to the called party's telephone through the NCC networks is failed, a line connection is established through the public telecommunication network.

If it is determined that the operation mode of the telephone is the routing phone mode when the telephone 20 is taken off-hook, the transmit/receive control section 17 of the terminal adapter 10 implements, as shown in Fig. 14, steps S41 through S44 respectively corresponding to steps S31 through S34 shown in Fig. 13, and delivers a called party's telephone number which is input through the telephone 20, if the highest-order digit of the telephone number is not "0," or if the telephone number or several highest-order digits (four digits, for instance) thereof is/are not listed or is/are marked in the phone table shown in Fig. 6 (step S45). Whereupon, the execution of this program is finished. In this case, a line connection to the called party's telephone is established through the public telecommunication network 1.

On the other hand, if the highest-order digit of the telephone number is "0," and if the telephone number or its several highest-order digits is/are listed but not marked in the phone table, a variable N in this program is set to a value of 1 (step S46). Then, a required page of the routing phone table is selected in accordance with a retrieval number which is a toll area code or a country code contained in the called party's telephone number, and the N-th number (here, the first number), among a group of NCC exchange telephone numbers corresponding to the retrieval number in the selected page of the routing phone table, is delivered (step S47). Further, a determination is made as to whether a dial tone indicating that an exchange waits for input of telephone number is returned from the exchange (step S48), and if such a dial tone is returned, the transmit/receive control section 17 delivers the telephone number input through the telephone 20 (step S45). Thus, if the number listed in the routing phone table corresponds to a toll area code, the toll area code is automatically delivered in the step S47 and then a called party's telephone number is delivered. In a typical case where the number listed in the routing phone table is an NCC exchange telephone number, an NCC exchange telephone number is first delivered as in the case of the direct phone mode shown in Fig. 12, and then the called party's telephone number (which is input through the telephone 20) is delivered when a dial tone is returned from the NCC exchange.

If it is determined at step S48 that no dial tone is returned form the exchange, the variable N is incremented by a value of 1, and whether the renewed variable N is greater than a value of 10 is determined (steps S49 and S50). If the renewed variable N is equal to or less than 10, the program returns to the step S47 in which the next number listed in the routing phone table is delivered. Subsequently, the processing explained in the above is implemented. If the renewed variable N is greater than a value of 10, the telephone number input through the telephone 20 is delivered (step S45), so that a line connection via the public network 1 is started.

Alternatively, the variable N may be reset to a value of 1 when it is determined that the renewed variable N exceeds a value of 10 unless such a determination has been made a predetermined number of times, so that the numbers listed in the routing phone table may be delivered the predetermined number of times.

As explained above, in the routing phone mode, NCC exchange telephone numbers are sequentially delivered in an order of utilization priority, and, if a line connection with any one of NCC exchanges is established, the called party's telephone number is delivered to the NCC exchange. Whereupon, by means of exchange service offered by the NCC exchange, a telecommunication line to the called party's telephone is established via the NCC network.

In the following, explanations will be given by taking an example where a telephone number for a toll local switch TLS provided in an NCC network 2A is registered in the routing table as a first NCC exchange telephone number associated with a toll area code [03].

In this case, if a called party's telephone number [03-5957-3001], for instance, is manually input through the telephone 20, the transmit/receive control section 17 of the terminal adapter 10 causes a buffer memory to store the called party's telephone number, and searches for the routing table with use of the toll area code [03] contained in the called party's telephone number, as a retrieval number. Then, a first NCC exchange telephone number read out from the routing table is delivered. As a result, the NCC exchange TLS is called. That is, routing by means of the terminal adapter 10 is implemented. If a line connection is established between the terminal adapter 10 and the NCC exchange TLS, the NCC exchange TLS returns a dial tone, indicating that it awaits for dialing, to the terminal adapter 10. In response to this, the transmit/receive control section 17 delivers the called party's telephone number [03-5957-3001] stored in the buffer memory, so that a called party's telephone specified by the called party's telephone number is called.

In the routing phone mode, a line connection is carried out by means of the routing function of the terminal adapter 10 in the above manner.

The present invention is not limited to the foregoing preferred embodiment and its modification explained above.

For instance, in the preferred embodiment, a single number is set in the addition phone table of Fig. 4 and in the direct phone table of Fig. 5 for each telephone. However, a required number of telephone numbers may be set in the addition phone table and/or the direct phone table. For instance, a plurality of called party's telephone numbers may be set in the direct phone table in an order of utilization priority, so that a second called party's telephone number may be delivered if a line connection cannot be established for the reason that the line is busy or the like when a first called party's telephone number is delivered. With this arrangement, a plurality of contacts can be called in sequence. For instance, if the user cannot call up his or her parent as a first urgent contact, he or she may attempt to call up his or her brother or sister as a second urgent contact. Similarly, if the user cannot call up a taxi company, he or she may attempt to call up another taxi company.

In the preferred embodiment, pieces of supplementary information (caller ID and password) are listed in correspondence with NCC identification numbers in a supplementary information table of Fig. 8. Alternatively, pieces of supplementary information may be listed so as to correspond to NCC names. In this case, the memory device 19 is provided with a table in which the NCC names are listed to correspond to NCC identification numbers. The transmit/receive control section refers to the table to find an NCC identification number corresponding to an NCC name and then finds supplementary information corresponding to the NCC identification number.

The list items and the number of columns for listing NCC identification numbers shown in various tables of Figs. 3-9 are intended to illustrative purposes only and may be modified in various ways. For instance, although the toll table shown in Fig. 9 is divided in accordance with utilization conditions including time classifications in term of date of a week and types of telecommunication services, the toll table may be classified in accordance with other utilization conditions.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A terminal adapter (10) to which a user terminal device (20) is connected and which is connected to a subscriber line (SL), comprising:
a memory device (19) for storing first line-connection information, second line-connection information, and third line-connection information that is used for line connection with a particular telecommunication network (2A, ..., or 2N) provided by a particular common carrier with which a user made a service contract; and
a communication control section (17, 18) for selectively performing an arbitrary one of a first function for reading out a called party's telephone number serving as the first line-connection information stored in advance in the memory device and for delivering the called party's telephone number to the subscriber line when the user terminal device is taken off-hook, a second function for reading out the second line-connection information from the memory device and for delivering the second line-connection information to the subscriber line prior to delivery of a called party's telephone number when the called party's telephone number is input through the user terminal device, and a third function for reading out the third line-connection information from the memory device and for delivering the third line-connection information to the subscriber line prior to delivery of a called party's telephone number when the called party' s telephone number is input through the user terminal device.

2. The terminal adapter according to claim 1, wherein said memory device (19) includes a table (FIG. 3) for specifying which function, the first, second or third function, should be performed, and said communication control section (17, 18) performs the first, second or third function specified in the table.

3. The terminal adapter according to claim 1, wherein said second function includes reading out a common carrier identification number, serving as the second line-connection information, from the memory device (19) prior to the delivery of the called party's telephone number when it is determined based on the called party's telephone number input through the user terminal device (20) that said particular telecommunication network is to be utilized; and
said third function includes reading out an exchange identification number, indicative of an exchange (TLS) provided in the particular telecommunication network and serving as the third line-connection information, when it is determined based on the called party's telephone number input through the user terminal device that the particular telecommunication network is to be utilized.

4. The terminal adapter according to claim 3, wherein said memory device stores in advance a plurality of exchange telephone numbers respectively used for line connection with a plurality of particular communication networks (2A-2N) and serving as said third line-connection information; and
said third function includes sequentially reading out, from the memory device, exchange telephone numbers respectively corresponding to a plurality of exchanges, respectively provided in the plurality of particular telecommunication networks, in accordance with an order of utilization priority of the plurality of particular telecommunication networks until a line connection with any one of the plurality of exchanges (TLS) is established, when it is determined based on the called party's telephone number input through the user terminal device that the plurality of particular telecommunication networks are permitted to be utilized.

5. The terminal adapter according to claim 3 or 4, wherein the memory device stores in advance a toll table (FIG. 9) in which tolls on telecommunication networks are associated with network-utilization conditions and common-carrier indication information; and
said second function includes determining a common carrier identification number corresponding to a telecommunication network having a higher utilization priority in accordance with the toll table and for reading out the determined common carrier identification number from the memory device prior to the delivery of the called party's telephone number.

6. A computer-readable recording medium, comprising:
programs (FIGS. 10, 12-16) recorded in the recording medium and permitted to be transferred in a computer (17-19) of a terminal adapter (10),
wherein said programs enable the computer, which is stored with the programs and first, second and third line-connection information, to selectively perform an arbitrary one of first, second and third functions,
said third line-connection information is used for line connection with a particular telecommunication network (2A, ..., or 2N) provided by a particular common carrier with which a user made a service contract,
said first function includes reading out a called party's telephone number stored, as the first line-connection information, in a memory device (19) of the computer and delivering the called party's telephone number to a subscriber line (SL) connected to the terminal adapter (20) when a user terminal device connected to the terminal adapter is taken off-hook,
said second function includes reading out the second line-connection information from the memory device and delivering the second line-connection information to the subscriber line prior to delivery of the called party's telephone number when the called party's telephone number is input through the user terminal device, and
said third function includes reading out the third line-connection information from the memory device and delivering the third line-connection information to the subscriber line prior to delivery of the called party's telephone number when the called party's telephone number is input through the user terminal device.

7. The computer-readable recording medium according to claim 6, wherein said programs include a program (S110) used for initial setting and renewal of said first, second and third line-connection information.

8. The computer-readable recording medium according to claim 6, wherein said programs include a program (FIG. 16) used for initial setting and renewal of a toll table which is stored in the memory device of the computer and in which tolls on telecommunication networks are associated with network-utilization conditions and common-carrier indication information.

9. A terminal adapter management system, comprising:
a plurality of terminal adapters (10, 10A) respectively connected to a telecommunication network (1, 2A-2N), each terminal adapter, to which a user terminal device (20) and a subscriber line (SL) are connected, including a communication control section (17, 18) and a memory device (19) for storing first line-connection information, second line-connection information, and third line-connection information that is used for line connection with a particular telecommunication network (2A, ..., or 2N) provided by a particular common carrier with which a user made a service contract, said communication control section being operable to selectively perform an arbitrary one of a first function for reading out a called party's telephone number serving as the first line-connection information stored in advance in the memory device and for delivering the called party's telephone number to the subscriber line (SL) when the user terminal device (20) is taken off-hook, a second function for reading out the second line-connection information from the memory device and for delivering the second line-connection information to the subscriber line prior to delivery of a called party's telephone number when the called party's telephone number is input through the user terminal device, and a third function for reading out the third line-connection information from the memory device and for delivering the third line-connection information to the subscriber line prior to delivery of a called party's telephone number when the called party's telephone number is input through the user terminal device; and
a service center (3), connected to the telecommunication network, for performing initial setting and renewal of the first, second and third line-connection information stored in the memory device of each of said terminal adapters through the telecommunication network.

10. The terminal adapter management system according to claim 9, wherein the memory device (19) of each of the plurality of terminal adapters stores in advance a toll table (FIG. 9) in which tolls on telecommunication networks are associated with network-utilization conditions and common-carrier indication information;
said second function includes determining a common carrier identification number, corresponding to a telecommunication network having a higher utilization priority, in accordance with the toll table and reading out the determined common carrier identification number from the memory device prior to the delivery of the called party's telephone number; and
said service center (3) carries out, through the telecommunication network, initial setting and renewal of the toll table stored in the memory device of each of said terminal adapters.

## Patentansprüche

1. Ein Terminaladapter (10), an dem eine Benutzer-Endeinrichtung (20) verbunden ist und der mit einer Teilnehmerleitung (SL) verbunden ist, der folgendes umfasst:
eine Speichervorrichtung (19), zur Speicherung erster Leitungsanschlussinformation, zweiter Leitungsanschlussinformation und dritter Leitungsanschlussinformation, die für Leitungsanschluss mit einem besonderen Telekommunikationsnetzwerk (2A, ... oder 2N) verwendet wird, das von einem besonderen Fernmeldeunternehmen bereitgestellt wird, mit dem ein Benutzer einen Dienstleistungsvertrag abgeschlossen hat; und
einen Kommunikationssteuerabschnitt (17, 18) zur selektiven Durchführung einer willkürlichen Funktion aus einer ersten Funktion zum Auslesen der Telefonnummer einer angerufenen Partei, die als die erste Leitungsanschlussinformation dient, die im Voraus in der Speichervorrichtung gespeichert ist, und zur Abgabe der Telefonnummer der angerufenen Partei an die Teilnehmerleitung, wenn die Benutzer-Endeinrichtung abgenommen wird, einer zweiten Funktion zum Auslesen der zweiten Leitungsanschlussinformation aus der Speichervorrichtung und zur Abgabe der zweiten Leitungsanschlussinformation an die Teilnehmerleitung, und zwar vor der Abgabe der Telefonnummer einer angerufenen Parteien, wenn die Telefonnummer der angerufenen Parteien durch die Benutzer-Endeinrichtung eingegeben wird, und einer dritten Funktion zum Auslesen der dritten Leitungsanschlussinformation aus der Speichervorrichtung und zur Abgabe der dritten Leitungsanschlussinformation an die Teilnehmerleitung, und zwar vor der Abgabe der Telefonnummer einer angerufenen Partei, wenn die Telefonnummer der angerufenen Partei durch die Benutzer-Endreinrichtung eingegeben wird.

2. Der Terminaladapter gemäß Anspruch 1, worin die Speichervorrichtung (19) eine Tabelle einschließt (Figur 3) zur Angabe, welche Funktion, die erste, zweite oder dritte Funktion durchgeführt werden soll, und worin der Kommunikationssteuerabschnitt (17, 18) die erste, zweite oder dritte Funktion durchführt, die in der Tabelle angegeben wird.

3. Der Terminaladapter gemäß Anspruch 1, worin die zweite Funktion das Auslesen der Identifikationsnummer eines Fernmeldeunternehmens einschließt, die als die zweite Leitungsanschlussinformation dient, aus der Speichervorrichtung (19), und zwar vor der Abgabe der Telefonnummer der angerufenen Partei, wenn auf der Grundlage der Telefonnummer der angerufenen Partei, die durch die Benutzer-Endeinrichtung (20) eingegeben wird, bestimmt wird, dass das besondere Telekommunikationsnetzwerk benutzt werden soll; und worin
die dritte Funktion das Auslesen einer Identifikationsnummer einer Vermittlung einschließt, die eine in dem besonderen Telekommunikationsnetzwerk bereitgestellte Vermittlung (TLS) anzeigt, und die als die dritte Leitungsanschlussinformation dient, wenn auf Grund der Telefonnummer der angerufenen Partei, die durch die Benutzer-Endeinrichtung eingegeben wird, bestimmt wird, dass das besondere Telekommunikationsnetzwerk benutzt werden soll.

4. Der Terminaladapter gemäß Anspruch 3, worin die Speichervorrichtung im Voraus eine Vielzahl von Vermittlungstelefonnummern speichert, die jeweils für den Leitungsanschluss mit einer Vielzahl von besonderen Kommunikationsnetzwerken (2A-2N) benutzt werden, und die als die dritte Leitungsanschlussinformation dienen; und
wobei die dritte Funktion das sequenzielle Auslesen aus der Speichervorrichtung von Vermittlungstelefonnummern einschließt, die jeweils einer Vielzahl von Vermittlungen entsprechen, die jeweils in der Vielzahl von besonderen Telekommunikationsnetzwerken bereitgestellt werden, in Übereinstimmung mit einer Reihenfolge der Benutzungspriorität der Vielzahl von besonderen Telekommunikationsnetzwerken, bis ein Leitungsanschluss mit irgendeiner der Vielzahl von Vermittlungen (TLS) aufgebaut wird, wenn auf Grund der Telefonnummer der angerufenen Partei bestimmt wird, die durch die Benutzer-Endeinrichtung eingegeben wird, dass gestattet wird, die Vielzahl von besonderen Telekommunikationsnetzwerken zu benutzen.

5. Der Terminaladapter gemäß Anspruch 3 oder 4, worin die Speichervorrichtung im Voraus eine Gebührentabelle (Figur 9) speichert, in der Gebühren des Telekommunikationsnetzwerkes mit Netzwerk-Benutzungsbedingungen und Anzeigeinformationen des Fernmeldeunternehmen verknüpft werden; und
worin die zweite Funktion die Bestimmung einer Identifikationsnummer des Fernmeldeunternehmens einschließt, die einem Telekommunikationsnetzwerk entspricht, das eine höhere Benutzungspriorität in Übereinstimmung mit der Gebührentabelle hat, und zum Auslesen der bestimmten Identifikationsnummer des Fernmeldeunternehmens aus der Speichervorrichtung, und zwar vor der Abgabe der Telefonnummer der angerufenen Partei.

6. Ein Computer-lesbares Medium, das folgendes umfasst:
Programme (Figuren 10, 12-16), die auf dem Aufzeichnungsmedium aufgezeichnet sind und denen gestattet wird, in einen Computer (17-19) eines Terminaladapters (10) überführt zu werden,
worin die Programme es dem Computer ermöglichen, in dem die Programme sowie erste, zweite und dritte Leitungsanschlussinformation gespeichert sind, selektiv eine willkürliche Funktion aus ersten, zweiten und dritten Funktionen durchzuführen,
wobei die dritte Leitungsanschlussinformation für Leitungsanschluss mit einem besonderen Telekommunikationsnetzwerk (2A, ... oder 2N) verwendet wird, das von einem besonderen Fernmeldeunternehmen bereitgestellt wird, mit dem ein Benutzer einen Dienstleistungsvertrag abgeschlossen hat,
worin die erste Funktion das Auslesen der Telefonnummer der angerufenen Partei einschließt, die als die erste Leitungsanschlussinformation in einer Speichervorrichtung (19) des Computers gespeichert ist, und das Abgeben der Telefonnummer der angerufenen Partei an eine Teilnehmerleitung (SL), die mit dem Terminaladapter (20) verbunden ist, wenn eine Benutzer-Endeinrichtung, die mit den Terminaladapter verbunden ist, abgenommen wird,
worin die zweite Funktion das Auslesen der zweiten Leitungsanschlussinformation aus der Speichervorrichtung einschließt und das Abgeben der zweiten Leitungsanschlussinformation an die Teilnehmerleitung, und zwar vor der Abgabe der Telefonnummer der angerufenen Partei, wenn die Telefonnummer der angerufenen Partei durch die Benutzer-Endeinrichtung eingegeben wird, und
worin die dritte Funktion das Auslesen der dritten Leitungsanschlussinformation aus der Speichervorrichtung einschließt und das Abgaben der dritten Leitungsanschlussinformation an die Teilnehmerleitung, und zwar vor der Abgabe der Telefonnummer der angerufenen Partei, wenn die Telefonnummer der angerufenen Partei durch die Benutzer-Endeinrichtung eingegeben wird.

7. Das Computer-lesbare Aufzeichnungsmedium gemäß Anspruch 6, worin die Programme ein Programm (S110) einschließen, das für das anfängliche Setzen und Erneuern der ersten, zweiten und dritten Leitungsanschlussinformation benutzt wird.

8. Das Computer-lesbare Aufzeichnungsmedium gemäß Anspruch 6, worin das Programm ein Programm (Figur 16) einschließt, das für das anfängliche Setzen und Erneuern einer Gebührentabelle verwendet wird, die in der Speichervorrichtung des Computers gespeichert ist, und in der Gebühren der Telekommunikationsnetzwerke mit Netzwerks-Verwendungsbedingungen und mit Anzeigeinformation des Fernmeldeunternehmens verknüpft werden.

9. Ein Terminaladapter-Verwaltungssystem, das folgendes umfasst:
eine Vielzahl von Terminaladaptern (10, 10A), die jeweils mit einem Telekommunikationsnetzwerk (1, 2A-2N) verbunden sind,
wobei jeder Terminaladapter, an dem eine Benutzer-Endeinrichtung (20) und eine Teilnehmerleitung (SL) angeschlossen sind, einen Kommunikationssteuerabschnitt (17, 18) und eine Speichervorrichtung (19) zur Speicherung von erster Leitungsanschlussinformation, zweiter Leitungsanschlussinformation und dritter Leitungsanschlussinformation einschließt, die für den Leitungsanschluss mit einem besonderen Telekommunikationsnetzwerk (2A, ... oder 2N) verwendet wird, das von einem besonderen Fernmeldeunternehmen bereitgestellt wird, mit dem ein Benutzer einen Dienstleistungsvertrag abgeschlossen hat, wobei der Kommunikationssteuerabschnitt betreibbar ist, um selektiv eine willkürliche Funktion aus einer ersten Funktion zum Auslesen der Telefonnummer der angerufenen Partei, die als die erste Leitungsinformation dient, die im Voraus in der Speichervorrichtung gespeichert ist, und zur Abgabe der Telefonnummer der angerufenen Partei an die Teilnehmerleitung (SL), wenn die Benutzer-Endeinrichtung (20) abgenommen wird, einer zweiten Funktion zum Auslesen der zweiten Leitungsanschlussinformation aus der Speichervorrichtung und zur Abgabe der zweiten Leitungsanschlussinformation an die Teilnehmerleitung, und zwar vor der Abgabe der Telefonnummer der angerufenen Partei, wenn die Telefonnummer der angerufen Partei durch die Benutzer-Endeinrichtung eingegeben wird, und einer dritten Funktion zum Auslesen der dritten Leitungsanschlussinformation aus der Speichervorrichtung und zur Abgabe der dritten Leitungsanschlussinformation an die Teilnehmerleitung, und zwar vor der Abgabe der Telefonnummer der angerufenen Partei, wenn die Telefonnummer der angerufenen Partei durch die Benutzer-Endeinrichtung eingegeben wird; und
eine Dienststation (3), die mit dem Kommunikationsnetzwerk verbunden ist, zur Durchführung von anfänglichem Setzen und Erneuern der ersten, zweiten und dritten Leitungsanschlussinformation, die in der Speichervorrichtung gespeichert ist, für jeden der Terminaladapter durch das Telekommunikationsnetzwerk.

10. Das Terminaladapter-Verwaltungssystem gemäß Anspruch 9, worin die Speichervorrichtung (19) eines jeden der Vielzahl von Terminaladaptern im Voraus eine Gebührentabelle (Figur 9) speichert, in der Gebühren des Telekommunikationsnetzwerks mit Netzwerk-Benutzungsbedingungen und Anzeigeinformationen des Fernmeldeunternehmens verknüpft sind;
worin die zweite Funktion das Bestimmen einer Identifikationsnummer eines Fernmeldeunternehmens einschließt, die einem Telekommunikationsnetzwerk entspricht, das eine höhere Benutzungspriorität hat, in Übereinstimmung mit der Gebührentabelle, und das Auslesen der bestimmten Identifikationsnummer des Fernmeldeunternehmens aus der Speichervorrichtung, und zwar vor der Abgabe der Telefonnummer der angerufenen Partei; und
worin die Dienststation (3) durch das Telekommunikationsnetzwerk das anfängliche Setzen und Erneuern der Gebührentabelle, die in der Speichervorrichtung eines jeden der Terminaladapter gespeichert ist, ausführt.

## Revendications

1. Adaptateur de terminal (10), auquel un dispositif terminal utilisateur (20) est connecté et qui est connecté à une ligne d'abonné (SL), comprenant :
un dispositif à mémoire (19) pour stocker une première information de connexion de ligne, une deuxième information de connexion de ligne, et une troisième information de connexion de ligne, utilisées pour établir la connexion de ligne avec un réseau de télécommunication (2A, ..., ou 2N) particulier, muni d'un porteuse commune particulière, pour laquelle un utilisateur a conclu un contrat de service ; et
une section de contrôle de communication (17, 18) pour sélectivement effectuer une fonction arbitraire, parmi une première fonction de lecture d'un numéro de téléphone de partie appelée, servant de première information de connexion de ligne, stockée préalablement dans le dispositif à mémoire, et pour délivrer le numéro de téléphone de partie appelée à la ligne d'abonné lorsque le dispositif terminal utilisateur est décroché, une deuxième fonction pour lire la deuxième information de connexion de ligne depuis le dispositif à mémoire et pour délivrer la deuxième information de connexion de ligne à la ligne d'abonné avant de délivrer un numéro de téléphone de partie appelée, lorsque le numéro de téléphone de partie appelée est introduit par le dispositif terminal utilisateur, et une troisième fonction pour lire la troisième information de connexion de ligne depuis le dispositif à mémoire et pour fournir la troisième information de connexion de ligne à la ligne d'abonné avant de fournir un numéro de téléphone de partie appelée, lorsque le numéro de téléphone de partie appelée est introduit par l'intermédiaire du dispositif terminal utilisateur.

2. Adaptateur de terminal selon la revendication 1, dans lequel ledit dispositif à mémoire (19) comprend une table (FIG. 3) pour spécifier quelle fonction, la première, la deuxième et la troisième fonction, devrait être exécutée, et ladite section de contrôle de communication (17, 18) exécutant la première, la deuxième ou la troisième fonction, spécifiée dans la table.

3. Adaptateur de terminal selon la revendication 1, dans lequel ladite deuxième fonction comprend la lecture d'un numéro d'identification de porteuse commune servant de deuxième information de connexion de ligne, depuis le dispositif à mémoire (19) avant la fourniture du numéro de téléphone de partie appelée, lorsqu'il est déterminé, d'après l'entrée de numéro de téléphone de partie appelée faite par le dispositif terminal utilisateur (20) que ledit réseau de télécommunication particulier doit utiliser ; et
ladite troisième fonction comprend la lecture d'un numéro d'identification d'échange, indicatif d'un standard (TLS) fourni dans le réseau de télécommunication particulier et servant de troisième information de connexion de ligne, lorsqu'il est déterminé, d'après l'entrée de numéro de téléphone de partie appelée, faite par le dispositif terminal utilisateur, que le réseau de télécommunication particulier doit utiliser.

4. Adaptateur de terminal selon la revendication 3, dans lequel ledit dispositif à mémoire stocke préalablement une pluralité de numéros de téléphone de standards respectivement utilisés pour la connexion de ligne avec une pluralité de réseaux de communication (2A à 2N) particuliers et servant de troisième information de connexion de ligne ; et
ladite troisième fonction comprend la lecture séquentielle depuis le dispositif à mémoire de numéros de téléphone de standard correspondant respectivement à une pluralité de standards, respectivement, prévus dans la pluralité de réseaux de télécommunication particuliers, selon un ordre de priorité d'utilisation de la pluralité de réseaux de télécommunication particuliers, jusqu'à ce qu'une connexion de ligne avec l'un quelconque de la pluralité des standards (TLS) soit établi, lorsqu'il est déterminé, d'après le numéro de téléphone de la partie appelée introduit par le dispositif terminal utilisateur, que la pluralité de réseaux de télécommunication particuliers sont autorisés à l'utilisation.

5. Adaptateur de terminal selon la revendication 3 ou 4, dans lequel le dispositif à mémoire stocke préalablement une table de taxation (FIG. 9), dans laquelle les taxes appliquées sur les réseaux de télécommunication sont associées à des conditions d'utilisation de réseau et à une information d'indication de porteuse commune ; et
ladite deuxième fonction comprend la détermination d'un numéro d'identification de porteuse commune correspondant à un réseau de télécommunication ayant une priorité d'utilisation supérieure selon la table de taxation et pour lire le numéro d'identification de porteuse commune déterminé, depuis le dispositif à mémoire, avant de délivrer le numéro de téléphone de la partie appelée.

6. Support d'enregistrement lisible par un ordinateur, comprenant :
des programmes (FIGS. 10, 12 à 16) enregistrés dans le support d'enregistrement et autorisés à être transférés dans un ordinateur (17 à 19) d'un adaptateur de terminal (10),
dans lequel lesdits programmes permettent à l'ordinateur, où sont stockés les programmes et une première, une deuxième et une troisième information de connexion de ligne, d'exécuter sélectivement une fonction arbitraire, parmi les premières, deuxièmes et troisièmes fonctions,
ladite troisième information de connexion de ligne est utilisée pour la connexion de ligne avec un réseau de télécommunication (2A, ..., ou 2N) particulier, muni d'une porteuse commune particulière, pour laquelle un utilisateur a établi un contrat de service,
ladite première fonction comprend la lecture d'un numéro de téléphone de partie appelée, stocké, à titre de première information de connexion de ligne, dans un dispositif à mémoire (19) de l'ordinateur et délivrant le numéro de téléphone de partie appelée à une ligne d'abonné (SL) connectée à l'adaptateur de terminal (20) lorsqu'un dispositif terminal utilisateur, connecté à l'adaptateur de terminal, est décroché,
ladite deuxième fonction comprend la lecture de la deuxième information de connexion de ligne depuis le dispositif à mémoire et la fourniture de la deuxième information de connexion de ligne à la ligne d'abonné avant de fournir le numéro de téléphone de partie appelée lorsque le numéro de téléphone de partie appelée est introduit par le dispositif terminal utilisateur, et
ladite troisième fonction comprend la lecture de la troisième information de connexion de ligne, d'après le dispositif à mémoire, et la fourniture de la troisième information de connexion de ligne à la ligne d'abonné, avant la fourniture du numéro de téléphone de partie appelée, lorsque le numéro de téléphone de partie appelée est introduit par le dispositif terminal utilisateur.

7. Support d'enregistrement lisible par un ordinateur selon la revendication 6, dans lequel lesdits programmes comprennent un programme (S110) utilisé pour le réglage initial et le rafraîchissement de ladite première, deuxième et troisième information de connexion de ligne.

8. Support d'enregistrement lisible par un ordinateur selon la revendication 6, dans lequel lesdits programmes comprennent un programme (FIG. 16) utilisé pour le réglage initial et le rafraîchissement d'une table de taxation, stockée dans le dispositif à mémoire de l'ordinateur et dans laquelle des taxes, appliquées sur des réseaux de télécommunication, sont associées à des conditions d'utilisation du réseau et à une information d'indication de porteuse commune.

9. Système de gestion d'un adaptateur de terminal, comprenant :
une pluralité d'adaptateurs de terminaux (10, 10A) respectivement connectés à un réseau de télécommunication (1, 2A à 2N), chaque adaptateur de terminal, auquel un dispositif terminal utilisateur (20) et une ligne d'abonné (SL) sont connectés, comprenant une section de contrôle de communication (17, 18) et un dispositif à mémoire (19) pour stocker une première information de connexion de ligne, une deuxième information de connexion de ligne, et une troisième information de connexion de ligne utilisées pour établir la connexion de ligne avec un réseau de télécommunication (2A, ..., ou 2N) particulier, alimenté par une porteuse commune particulière pour laquelle un utilisateur a établi un contrat de service, ladite section de contrôle de communication étant susceptible de fonctionner pour exécuter sélectivement une fonction arbitraire, parmi une première fonction pour lire un numéro de téléphone de partie appelée servant de première information de connexion de ligne, stockée préalablement dans le dispositif à mémoire, et pour délivrer le numéro de téléphone de partie appelée à la ligne d'abonné (SL) lorsque le dispositif terminal utilisateur (20) est décroché, une deuxième fonction pour lire la deuxième information de connexion de ligne depuis le dispositif à mémoire et pour délivrer la deuxième information de connexion de ligne à la ligne d'abonné avant de fournir un numéro de téléphone de partie appelée, lorsque le numéro de téléphone de partie appelée est introduit par l'intermédiaire du dispositif terminal utilisateur, et une troisième fonction pour lire la troisième information de connexion de ligne depuis le dispositif à mémoire et pour délivrer la troisième information de connexion de ligne à la ligne d'abonné avant de fournir un numéro de téléphone de partie appelée, lorsque le numéro de téléphone de partie appelée est introduit par l'intermédiaire du dispositif terminal utilisateur ; et
un centre de service (3), connecté au réseau de télécommunication pour exécuter un réglage initial et un rafraîchissement de la première, deuxième et troisième information de connexion de ligne stockée dans le dispositif à mémoire de chacun desdits adaptateurs de terminaux par l'intermédiaire du réseau de télécommunication.

10. Système de gestion d'adaptateurs de terminal selon la revendication 9, dans lequel le dispositif à mémoire (19) de chacun de la pluralité des adaptateurs de terminaux stocke préalablement une table de taxation (FIG. 9), dans laquelle des taxes appliquées sur des réseaux de télécommunication sont associées à des conditions d'utilisation de réseau et à une information d'indication de porteuse commune ;
ladite deuxième fonction comprend la détermination d'un numéro d'identification de porteuse commune, correspondant à un réseau de télécommunication ayant une priorité d'utilisation supérieure, selon la table de taxation, et la lecture du numéro d'identification de porteuse commune déterminé, depuis le dispositif à mémoire, avant la fourniture du numéro de téléphone de partie appelée ; et
ledit centre de service (3) exécute, par l'intermédiaire du réseau de télécommunication, le réglage initial et le rafraîchissement de la table de taxation stockée dans le dispositif à mémoire de chacun desdits adaptateurs de terminaux.
